# EUROPÄISCHE PATENTSCHRIFT

(11) **EP 1 814 380 B1**
(45) Veröffentlichungstag und Bekanntmachung des Hinweises auf die Patenterteilung: **16.07.2008**
(21) Anmeldenummer: 06724252.9
(22) Anmeldetag: 11.04.2006
(51) Int. Cl.: A01J 5/04

(54) **VORRICHTUNG ZUR STIMULATION EINES EUTERS BEI EINEM MELKVORGANG**
DEVICE FOR STIMULATING AN UDDER DURING MILKING
DISPOSITIF POUR STIMULER UN PIS LORS D'UN PROCESSUS DE TRAITE

(30) Priorität: 20.04.2005 DE 102005018335
(43) Veröffentlichungstag der Anmeldung: 08.08.2007
(73) Patentinhaber: Lactocorder AG, 9052 Niederteufen (CH)
(72) Erfinder: HOEFELMAYR, Tilman, CH-9052 Niederteufen (CH)
(74) Vertreter: Grünecker, Kinkeldey, Stockmair & Schwanhäusser Anwaltssozietät
(86) Internationale Anmeldenummer: PCT/EP2006/003335
(87) Internationale Veröffentlichungsnummer: WO 2006/111305

(56) Entgegenhaltungen:
- DE-A1- 3 638 008
- US-A- 4 190 021
- US-A- 4 391 221

## Beschreibung

Die vorliegende Erfindung bezieht sich allgemein auf das automatische Melken von Nutztieren, insbesondere auf Vorrichtungen, mit denen ein Euter eines Nutztiers vor einem Melkvorgang stimuliert werden kann.

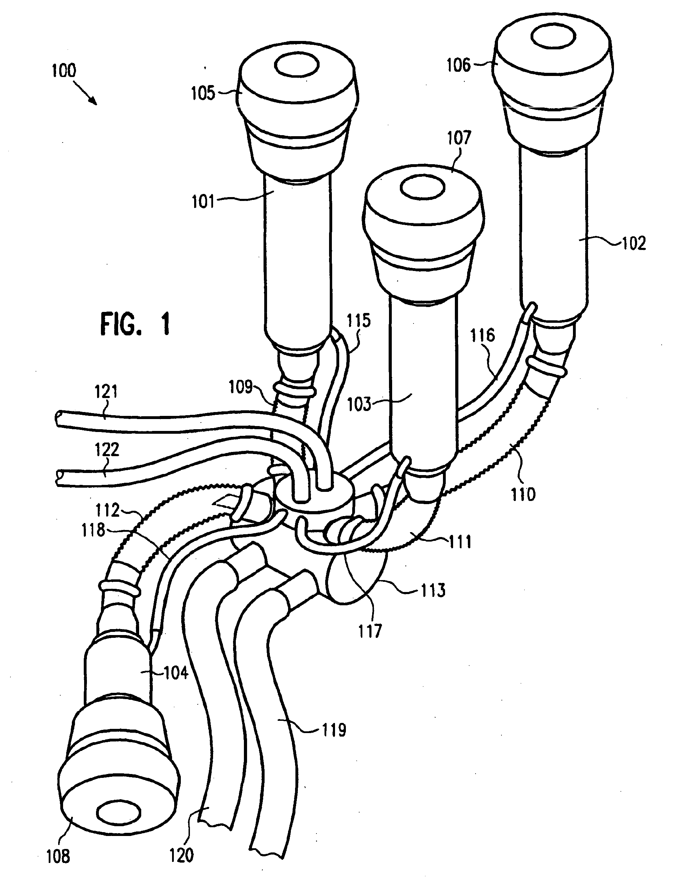

In der modernen Landwirtschaft werden zum Melken von Nutztieren, insbesondere von Kühen, Melkmaschinen eingesetzt. Diese sind dafür ausgelegt, den Saugvorgang eines Jungtiers nachzuahmen und dadurch Milch aus dem Euter des gemolkenen Tiers zu entnehmen. Eine Melkmaschine nach dem Stand der Technik wird im Folgenden mit Bezug auf Fig. 1 beschrieben.

Die Melkmaschine umfasst ein Melkzeug 100. Das Melkzeug 100 weist entsprechend der Anzahl der Zitzen des zu melkenden Tiers die Melkbecher 101, 102, 103, 104 auf. In Melkzeugen zum Melken von Kühen sind deshalb vier Melkbecher vorgesehen. In jeden der Melkbecher 101-104 ist ein Zitzengummi 105, 106, 107, 108 eingesetzt, so beispielsweise der Zitzengummi 105 in den Melkbecher 101. Jeder der Zitzengummis 105, 106, 107, 108 ragt in den dazugehörigen Melkbecher 101-104 hinein und weist an einem unteren Ende eine Öffnung auf, an die ein Milchschlauch 109, 110, 111, 112 angeschlossen ist.

Die Milchschläuche 109-112 sind mit einem Milchsammelstück 115 verbunden. Das Milchsammelstück 113 kann zwei Kammern aufweisen, an die jeweils zwei der Milchschläuche 109-112 angeschlossen sind. Von jeder der Kammern führt eine Milchleitung 119, 120 zu einem Sammelbehälter (nicht gezeigt).

An die Melkbecher 101-104 sind ferner Steuerschläuche 115, 116, 117, 118 angeschlossen. Jeder der Steuerschläuche 115-118 verbindet einen Pulsraum, der ein Volumen zwischen der Innenwand des zugehörigen Melkbechers 101-104 und dem in diesen eingesetzten Zitzengummi 105-108 umfasst, mit einer von zwei Steuerleitungen 121, 122. Insbesondere können an jede der Steuerleitungen 121, 122 jeweils zwei Melkbecher angeschlossen sein. Die Steuerleitungen 121, 122 sind mit einem Pulsator verbunden.

Beim Betrieb der Melkmaschine wird jeder der Melkbecher 101-104 über eine Zitze des zu melkenden Tiers gestülpt. Die Zitzen befinden sich dann im Inneren der Zitzengummis 105-108. Anschließend wird an die Milchschläuche 109, 110, 111 und 112 ein Unterdruck angelegt. Der Pulsator erzeugt während des Melkvorgangs in dem Pulsraum einen sich periodisch ändernden Druck, der auf die Außenwände der Zitzengummis 105-108 wirkt

Ist der Druck auf die Außenwände der Zitzengummis 105-108 gleich dem Druck im Inneren, nehmen die Zitzengummis aufgrund ihrer elastischen Spannung ihre normale kreisrunde Ausgangsform an und üben im Wesentlichen keinen Druck auf die Zitzen aus. Diese Phase wird Saugphase genannt, weil der Unterdruck im Inneren des Zitzengummis den Widerstand des Strichkanals überwinden kann und somit Milch in das Melkzeug absaugen kann. Wenn im Pulsraum der Druck auf die Außenwand des Zitzengummis 105-108 größer als der Druck im Inneren des Zitzengummis 105 ist, wird dieser nach innen auf die Zitze des Tiers gedrückt. Damit wird die Zitzenspitze so stark zusammengedrückt, dass der Unterdruck im Inneren des Zitzengummis nicht ausreicht, den Widerstand des Strichkanals zu überwinden und Milch abzusaugen. Man spricht hier von der Entlastungsphase. Durch die vom Pulsator erzeugten periodischen Druckänderungen können so die Zitzen abwechselnd zusammengedrückt und lockergelassen werden. Da die Zitzen im Inneren des Zitzengummis einem im Wesentlichen konstanten Unterduck ausgesetzt sind, stauen sich während des Melkvorgangs im Zitzengewebe Blut und Lymphe, die durch die periodische Massagebewegung des Zitzengummis zur Zitzenbasis hin zurück gefördert werden sollen. Außerdem können durch die Zitzengummibewegung taktile Reize, die ein gesäugtes Jungtier auf das Euter ausübt, nachgeahmt werden.

Der Pulsator kann so ausgelegt sein, dass die periodischen Druckänderungen in den Steuerleitungen 121, 122 zueinander phasenverschoben sind, und zwar so, dass jeweils ein maximaler Druck in einer der Steuerleitungen 121, 122 gleichzeitig mit einem minimalen Druck in der anderen Steuerleitung 121, 122 auftritt. Dadurch kann abwechselnd Druck auf gegenüberliegende Zitzen ausgeübt werden, was die Milchabgabe vergleichmäßigt und von dem gemolkenen Tier als beruhigend und angenehm empfunden wird. Im Gegensatz zu dem hier beschriebenen sogenannten Wechseltakt-Pulsationssystem gibt es auch simultane Pulsationssysteme, bei denen die Steuerleitungen 121, 122 zu einer Steuerleitung zusammengefasst sind, womit die periodischen Druckänderungen auf alle vier Zitzen gleichzeitig wirken.

Zu einem effektiven und artgerechten Melkvorgang gehört neben dem eigentlichen Abmelken, bei dem der größte Teil der Milch aus dem Euter entnommen wird, eine Vorstimulation. Bei der Vorstimulation wird das Euter durch mechanische Reize in einen zur Milchabgabe geeigneten Zustand versetzt. Besonders empfindsam für solche Stimulationsreize sind die Zitzenspitzen.

Die Milch entsteht in Meinen Hohlräumen des Drüsengewebes des Euters, die als Alveolen bezeichnet werden. Deren Wände bestehen aus einer dünnen Zellschicht, den so genannten Alveolen (Milchbildungszellen), die von einem dichten Netz aus Blutgefäßen sowie einem feinen Muskulaturgewebe umgeben sind. Stoffe im Blut des Tiers treten durch die Zellwände in die Milchbildungszellen ein und werden dort kontinuierlich in Milch umgewandelt.

Die taktile Reizung der Zitzen beim Vorstimulieren setzt zwei Mechanismen in Gang. Zu ersten ist dies die sogenannte Tonuslockerung als nervöser Reflex, die bewirkt, dass die Zitze vermehrt durchblutet wird, sodass sie sich erigiert und der Strichkanal elastischer wird. Zum zweiten regt die taktile Reizung der Zitzen die Ausschüttung des Hormons Oxytozin im Gehirn (Hypothalamus) des Tieres an. Dieses wird über die Blutbahn transportiert und benötigt bei einer Kuh zwischen 40 und 60 Sekunden, bis es beim Erfolgsorgan, der Alveole ankommt. Dort bewirkt es die sogenannte Milchejektion, das Auspressen der in den Alveolen gebildeten und gespeicherten Milch in die kleineren und größeren Milchgänge des Euters. Von dort kann die Milch, der Schwerkraft folgend, in die Zisterne fließen und wird so für den Milchentzug verfügbar.

Zur Erstellung einer vollen Melkbereitschaft vor Beginn des Melkens einer Kuh sollte die Vorstimulation ca. eine Minute lang durchgeführt werden. Erst die durch die Vorstimulation angeregte Ausschüttung der Milch in die Zisterne ermöglicht ein vollständiges Abmelken der im Euter gespeicherten Milch. Außerdem ist es wichtig, dass die Zitzen vor dem Abmelken vollständig erigiert sind, da es sonst leicht vorkommt, dass die Melkbecher entlang der Zitzen nach oben rutschen und die Zitzenbasis abschnüren. Dies engt den inneren Verbindungskanal zwischen der Zisterne und der Zitze ein, wodurch das Abmelken stark behindert wird. Das Hochrutschen der Melkbecher zu Beginn des Melkens ist nicht nur sehr unangenehm für die Tiere, sondern es können auch Verletzungen des Fürstenbergschen Venenrings und Entzündungen des Euters auftreten.

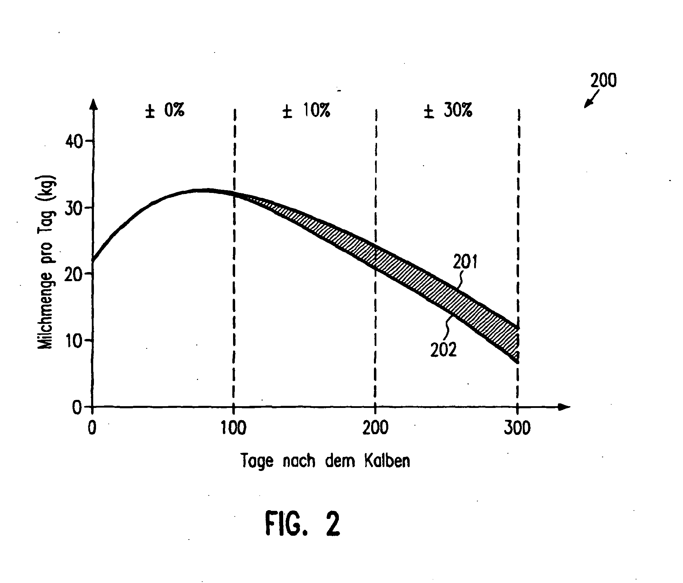

Eine ausreichende Vorstimulation wirkt sich positiv auf die Milchleistung der Tiere aus. Fig. 2 zeigt schematisch die von Kühen während einer Laktationsperiode produzierte Milchmenge. Ein erster Graph 201 zeigt die Milchmenge, die von einer Kuh produziert wird, bei der vor dem Melken eine ausreichende Vorstimulation durchgeführt wurde, in Abhängigkeit von der seit dem Kalben verstrichenen Zeit. Die Milchmenge, die von einer Kuh produziert wird, bei der vor dem Melken keine ausreichende Vorstimulation durchgeführt wurde, wird durch einen zweiten Graphen 202 veranschaulicht.

Während der ersten hundert Tage nach der Geburt eines Kalbs steigt die erzeugte Milchmenge an und geht dann langsam wieder zurück. Wird während der ersten hundert Tage keine ausreichende Vorstimulation durchgeführt, hat dies nur geringe unmittelbare Auswirkungen auf die Milchleistung der Kuh. Zwischen dem hundertsten und dem zweihundertsten Tag jedoch gibt eine Kuh, bei der keine ausreichende Vorstimulation durchgeführt wird, um bis zu 15 % weniger Milch. Zwischen dem zweihundertsten und dem dreihundertsten Tag kann durch eine ausreichende Vorstimulation sogar eine Steigerung der Milchleistung um bis zu 30 % erzielt werden. Der Mehrertrag von 15% bzw. 30% kann allerdings nur erreicht werden, wenn die Kuh während der gesamten Laktation, also auch während der ersten 100 Tage, ausreichend vorstimuliert wird. Auch die Qualität der Milch kann durch eine ausreichende Vorstimulation verbessert werden.

Die Vorstimulation kann von Hand durchgeführt werden, indem die Zitzen vor dem Melken mindestens eine Minute lang leicht massiert werden. Dies ist jedoch insbesondere auf Bauernhöfen mit größerem Viehbestand mit einem erheblichen Zeitaufwand verbunden. So wird aus arbeitswirtschaftlichen Gesichtspunkten in der Praxis die Melkmaschine meist direkt an das nicht vorstimulierte Euter angesetzt, obwohl die erheblichen Nachteile einer unterlassenen adäquaten Vorstimulation bei vielen Bauern im Grunde bekannt sind.

Beim Ansetzen der eingeschalteten Melkmaschine an das Euter erfahren die Zitzen durch die pulsierenden Zitzengummis durchaus den nötigen Stimulationsreiz. Erfolgt das Ansetzen aber an ein nicht vorbereitetes Euter, so besteht das Problem darin, dass das erste Setzen des Stimulationsreizes und der Beginn des Abmelkens gleichzeitig erfolgen. Da die Milchejektion als Reaktion auf den Stimulationsreiz aber erst um ca. eine Minute verzögert einsetzt, kann aus dem Euter zu Beginn lediglich die sogenannte Zistemenmilch abgemolken werden. Diese ist während der Zwischenmelkzeit aus dem Alveolarbereich abgetropft und hat sich in der Zisterne gesammelt. Da die Zisternenmilch aber nur ca. 20 % der gesamten im Euter gespeicherten Milch ausmacht, kommt es beim Ansetzen der Melkmaschine an ein nicht vorstimuliertes Euter häufig dazu, dass zu Beginn des Melkens mehr Milch abgemolken wird als vom Euter zu diesem Zeitpunkt zur Verfügung gestellt wird. Damit entsteht schon beim Melkbeginn am Euter eine Situation, die dem sogenannten Blindmelken entspricht Das typische Blindmelken entsteht am Ende des Melkens, wenn das Melkzeug nicht rechtzeitig abgenommen wird und am leeren Euter weiter arbeitet. Die extrem schädliche Wirkung des Blindmelkens auf die Eutergesundheit ist durch eine Vielzahl internationaler wissenschaftlicher Studien belegt und seit langem allgemein bekannt.

Es ist Stand der Technik, die Vorstimulation auch mit Hilfe der Melkmaschine durchzuführen. In der Druckschrift DE 2746310 A1 wird vorgeschlagen, vor Beginn des Melkvorgangs die Außenseite der Zitzengummis mit einem geringeren Unterdruck zu beaufschlagen als deren Inneres. Dies hat zur Folge, dass sich der Zitzengummi um die Zitze herumlegt, wodurch ein Milcheintritt in die Milchleitung verhindert wird. Dadurch wird die Milch noch nicht aus dem Euter gesaugt und die Zitze wird durch die von dem Pulsator erzeugten periodischen Druckänderungen massiert. Die Vorstimulation kann mit Hilfe einer Vorrichtung durchgeführt werden, die ein Drosselventil umfasst, das sich zwischen dem Melkzeug und dem Pulsator befindet.
Eine solche Vorrichtung ist ebenfalls aus der DE-A-3638008 bekannt. Ein Nachteil dieser Vorrichtung ist dass sie relativ groß und somit für eine feste Montage ausgelegt ist Damit kann diese Vorrichtung nicht in Melksystemen für Anbindeställe eingesetzt werden, wo die Melkeinheit vom Melker von einer Kuh zur nächsten getragen wird. Außerdem muss sich der Benutzer beim Melken zwischen der Kuh und der Stelle, an der die Vorrichtung montiert ist. hin- und herbewegen, was den Zeitaufwand für das Melken erhöht und als umständlich empfunden wird. Ein weiterer Nachteil der Vorrichtung besteht darin, dass das Drosselventil kontinuierlich von einer ersten Stellung in eine zweite Stellung bewegt wird, so dass sich ein im wesentlichen linearer Druckanstieg im Raum zwischen den Melkbechern und den Zitzengummis ergibt. Dadurch wird bereits zu einem relativ frühen Zeitpunkt Milch abgemolken. Wünschenswert wäre jedoch, erst eine gewisse Zeit lang das Euter zu stimulieren und dann erst mit dem eigentlichen Melkvorgang zu beginnen.

Ferner offenbart das amerikanische Patent US 4643132 einen Pulsator für Melkmaschinen, der er ermöglicht, während einer Stimulationsphase die Frequenz der bereitgestellten Druckimpulse zu vergrößern. Eine erhöhte Pulsationsfrequenz ist aber keineswegs unproblematisch, da Imitationen der Schleimhaut im Inneren der Zitzen auftreten können, durch die das Euter langfristig geschädigt werden kann.

Die Verwendung eines speziell ausgelegten Pulsators für die Vorstimulation hat den Nachteil, dass ein Bauer, der die Vorstimulation mit Hilfe seiner Melkmaschine durchführen möchte, erst einen solchen Pulsator anschaffen muss, was mit relativ hohen Kosten verbunden ist. Außerdem stehen Pulsatoren mit eingebauter Vorrichtung für Vorstimulation bei weitem nicht bei allen Melkmaschinen-Typen und -Herstellern zu Verfügung. Das Hauptproblem besteht aber darin, dass der Pulsator das sensibelste Bauteil der Melkmaschinenanlage darstellt, das in seiner Charakteristik (wie Pulsfrequenz, Länge der Saugphase, Steilheit der An- und Abstiegsflanken etc.) auf die sonstigen Einflussfaktoren und Maschinenkomponenten (wie Härte und Durchmesser des Zitzengummis, Volumen des Pulsraumes, Melkzeuggewicht, Länge und Durchmesser der Steuerschläuche, Einstellung der Melkvakuumhöhe etc) sehr genau abgestimmt sein muss. Dies ist auch einer der Gründe, warum sich die Charakteristika der Pulsatoren bei verschiedenen Melkmaschinen-Typen und -Herstellern entsprechend unterscheiden. Aus Sorge vor melkmaschinenbedingten Euterschäden und irreversiblen Milchleistungsminderungen, sowie aufgrund unklarer Haftungsfragen im Schadensfall meiden Bauern grundsätzlich eine Kombination von Maschinenkomponenten verschiedener Hersteller.

Im Hinblick auf diese Probleme besteht ein Bedarf nach einer Vorrichtung, die bequem und unkompliziert verwendet, kostengünstig hergestellt und ohne großen Aufwand in vorhandene Melkmaschinen integriert werden kann, wobei die vorhandenen Pulsatorcharakteristika beim normalen Melkvorgang unverändert bleiben, und mit der eine artgerechte und vollwertige Vorstimulation des Euters durchgeführt werden kann, und zwar im wesentlichen ohne zusätzlichen Zeitaufwand pro Tier.

Gemäß einem Aspekt der vorliegenden Erfindung wird diese Aufgabe durch eine Vorrichtung zur Stimulation eines Euters bei einem Melkvorgang mit einem mit einer Hand umfassbaren Gehäuse gelöst. Das Gehäuse weist einen ersten Anschluss und einen zweiten Anschluss auf. Der erste Anschluss ist zur Verbindung mit einem Pulsator geeignet und der zweite Anschluss ist zur Verbindung mit einem Melkbecher geeignet. In dem Gehäuse ist zwischen dem ersten Anschluss und dem zweiten Anschluss ein Drosselventil angebracht. Außerdem ist im Gehäuse eine Steuervorrichtung untergebracht. Diese ist dafür ausgelegt, das Drosselventil nach einer vorbestimmten Zeitdauer von einem teilweise geschlossenen Zustand in einen geöffneten Zustand zu versetzen.

Durch das mit einer Hand umfassbare Gehäuse kann die Vorrichtung in der Nähe des Melkzeugs in eine Steuerleitung von dem Pulsator zu dem Melkbecher eingefügt werden. Dadurch ist sie für den Benutzer während des Anlegens des Melkzeugs und des Melkens leicht erreichbar, so dass er sich nicht von dem gemolkenen Tier entfernen muss. Die Vorrichtung kann zusammen mit einem herkömmlichen Pulsator verwendet werden. Die Charakteristika des gegebenen Pulsators bleiben in der eigentlichen Melkphase unverändert. Das Euter wird mit der vom Pulsator vorgegebenen Frequenz stimuliert, so dass keine durch eine hohe Pulsationsfrequenz verursachten Irritationen der Zitzen auftreten. Da das Drosselventil erst nach der vorbestimmten Zeitdauer in den geöffneten Zustand versetzt wird, kann die physiologisch notwendige klare Trennung von Vorstimulation und Melkvorgang erreicht werden. Außerdem kann die Vorrichtung zur Stimulation eines Euters bei einem Melkvorgang leicht nachträglich in eine vorhandene Melkmaschine eingebaut werden. Dadurch kann der Aufwand, der bei der Umstellung auf das Melken mit maschineller Vorstimulation anfällt, verringert werden.

Geeigneterweise weist die Vorrichtung eine Gesamtlänge von nicht mehr als 15 cm auf. Durch die geringe Größe kann die Vorrichtung leicht im unmittelbaren Arbeitsbereich des Melkers eingebaut, sowie bequem einhändig bedient werden.

Vorteilhafterweise weist die Vorrichtung ein Gesamtgewicht von nicht mehr als 150 Gramm auf. Durch das geringe Gewicht wird beim griffgünstigen Einbau der Vorrichtung unmittelbarer am Melkzeug, dessen Gesamtgewicht (Größenordnung 2-4 kg) nicht beeinträchtigt. Damit ist eine mühelose Handhabung und ein leichter Transport sichergestellt.

In weiterer vorteilhafter Ausgestaltung der Erfindung umfasst die Steuervorrichtung eine Einstellvorrichtung zum Einstellen der vorbestimmten Zeitdauer. Damit kann die Dauer der Vorstimulation variiert und individuell an das zu melkende Tier angepasst werden.

Geeigneterweise umfasst die Einstellvorrichtung ein Schlagwerk, das dafür ausgelegt ist, beim Einstellen eines Werts der vorgegebenen Zeitdauer, der einen Schwellwert überschreitet, ein akustisches und/oder in der Hand spürbares Signal zu erzeugen. Dadurch kann die für die entsprechende Kuh vorgesehene Vorstimulationszeit (z.B. 90, 60, 45 oder 30 Sekunden) auch blind eingestellt werden und Bedienungsfehler, die zum Einstellen einer zu kurzen Vorstimulationszeit führen, können vermieden werden.

Vorteilhafterweise ist die Steuervorrichtung fremdenergieunabhängig ausgebildet. Dadurch wird die Mobilität der Vorrichtung verbessert und die Installation der Vorrichtung vereinfacht.

Geeigneterweise ist die Steuervorrichtung dafür ausgelegt, durch von dem Pulsator stammende Druckwirkungen angetrieben zu werden. Dadurch benötigt die Vorrichtung keine eigene Energiequelle, wodurch keine laufenden Kosten anfallen und Störungen beim Betrieb der Vorrichtung, die z.B. durch leere Batterien verursacht werden können, vermieden werden können.

Vorteilhafterweise umfasst die Steuervorrichtung ein von einer Membran abgeschlossenes Volumen, das sich in Strömungsverbindung mit dem ersten Anschluss befindet. Eine Außenseite der Membran ist dem Atmosphärendruck ausgesetzt. Eine Übertragungsvorrichtung ist dafür ausgelegt, Bewegungen der Membran, die durch Druckunterschiede im Volumen verursacht werden, in eine Drehbewegung eines Zahnrads umzusetzen. Ein auf das Drosselventil einwirkender Schieber ist dafür ausgelegt, in Folge der Drehbewegung des Zahnrads verschoben zu werden. Dadurch wird ein zuverlässiger Antrieb der Vorrichtung durch Druckpulse, die vom Pulsator stammen, ermöglicht.

Geeigneterweise weist der Schieber auf einer dem Drosselventil abgewandten Seite einen Vorsprung auf, der in eine auf dem Zahnrad angebrachte Rille eingreift. Dadurch kann der Schieber durch die Drehbewegungen des Zahnrads hin- und herbewegt werden. Durch die Formgebung der Rille kann der zeitliche Verlauf der Bewegung des Schiebers und damit der Ablauf der von dem Drosselventil bewirkten Drosselung des Luftstroms zwischen dem Melkbecher und dem Pulsator gesteuert werden.

Vorteilhafterweise weist das Zahnrad an seinem Umfang eine Lücke ohne Zähne auf. Dadurch kann die Drehbewegung des Zahnrads angehalten werden, wenn die Übertragungsvorrichtung die Lücke erreicht.

In weiterer vorteilhafter Ausgestaltung der Erfindung ist das Drosselventil elektrisch zwischen dem teilweise geöffneten Zustand und dem geöffneten Zustand schaltbar. Die Steuervorrichtung umfasst einen zum Schalten des Drosselventils geeigneten Schaltkreis. Durch die elektronische Steuerung des Drosselventils wird eine besonders flexible Einstellung des zeitlichen Verlaufs der Drosselung des Luftstroms zwischen dem Pulsator und dem Melkbecher ermöglicht.

Geeigneterweise umfasst der Schaltkreis einen elektronischen Zeitgeber und ist dafür ausgelegt, das Drosselventil bei Empfang eines Signals vom elektronischen Zeitgeber zu schalten. Da elektronische Zeitgeber kostengünstig beschafft werden können, können durch die Verwendung solcher Bauteile die Herstellungskosten der Vorrichtung zur Stimulation eines Euters bei einem Melkvorgang niedrig gehalten werden.

In weiterer vorteilhafter Ausgestaltung der Erfindung umfasst der Schaltkreis einen Drucksensor, der in Strömungsverbindung mit dem ersten Anschluss steht und dafür ausgelegt ist, den elektronischen Zeitgeber bei einer Detektion eines Druckpulses in Gang zu setzen. Dadurch kann das Abzählen der Vorstimulationszeit durch den elektronischen Zeitgeber automatisch gestartet werden.

Vorteilhafterweise weist die Vorrichtung zur Stimulation eines Euters bei einem Metkvorgang ein Paar erster Anschlüsse und ein Paar zweiter Anschlüsse auf. Jeweils zwischen einem der ersten Anschlüsse und einem der zweiten Anschlüsse ist ein Drosselventil angebracht. Die Steuervorrichtung ist dafür ausgelegt, nach der vorbestimmten Zeitdauer beide Drosselventile von dem teilweise geschlossenen Zustand in den geöffneten Zustand zu versetzen. Dadurch ist auch bei einer Melkmaschine mit Wechseltaktpulsation, in der abwechselnd jeweils eine Hälfte der Zitzen des Tiers einem Druckpuls vom Pulsator ausgesetzt wird, nur eine einzige Vorrichtung erforderlich.

Geeigneterweise umfasst das Drosselventil ein Druckreglerventil. Dadurch kann der während der Vorstimulation an dem zweiten Anschluss bereitgestellte Unterdruck auf einen vorgegebenen Wert eingestellt werden.

In weiterer vorteilhafter Ausgestaltung der Erfindung umfasst das Druckreglerventil ein verstellbares elastisches Element. Dadurch kann eine Feineinstellung des vorgegebenen Unterdrucks durchgeführt werden.

Geeigneterweise umfasst die Vorrichtung einen von Hand gegen eine Federkraft spannbaren und einrastbaren Schieber, der dafür ausgelegt ist, auf das Drosselventil einzuwirken. Eine elektrisch steuerbare Entriegelung ist dafür ausgelegt, die Einrastung des Schiebers bei Empfang eines Signals vom Schaltkreis aufzuheben. Dadurch kann ein erheblicher Anteil der zum Schalten des Drosselventils erforderlichen Energie in Form von elastischer Energie bereitgestellt werden. Dadurch kann der Stromverbrauch der Vorrichtung verringert werden.

Die Erfindung soll nun anhand von Ausführungsbeispielen und den beiliegenden Zeichnungen, die sich auf diese Ausführungsbeispiele beziehen, näher erläutert werden. Es zeigen:
- Fig. 1: eine schematische Perspektivansicht eines Melkzeuges in einer Melkmaschine nach dem Stand der Technik;
- Fig. 2: eine schematische Skizze des zeitlichen Verlaufs der Milchleistung einer Kuh beim Melken mit ausreichender Vorstimulation und beim Melken ohne ausreichende Vorstimulation;
- Fig. 3a: eine schematische Explosionsansicht einer Vorrichtung zur Stimulation eines Euters bei einem Melkvorgang gemäß einer Ausführungsform der vorliegenden Erfindung:
- Fig. 3b: eine schematische Querschnittsansicht eines Drosselventils in der in Fig. 3a gezeigten Vorrichtung:
- Fig. 3c bis 3e: schematische Perspektivansichten von Teilen der in Fig. 3a gezeigten Vorrichtung;
- Fig. 4a: eine schematische Querschnittsansicht einer Steuervorrichtung in einer Vorrichtung zur Stimulation eines Euters bei einem Melkvorgang gemäß einer weiteren Ausführungsform der vorliegenden Erfindung;
- Fig. 4b: einen schematischen Schaltplan eines Schaltkreises in der in Fig. 4a gezeigten Steuervorrichtung;
- Fig. 5: eine schematische Skizze von Druckverläufen während einer Vorstimulation mit einer Vorrichtung gemäß der vorliegenden Erfindung; und
- Fig. 6: eine schematische Querschnittsansicht eines Drosselventils in einer Vorrichtung zur Stimulation eines Euters bei einem Melkvorgang gemäß einer Ausführungsform der vorliegenden Erfindung.

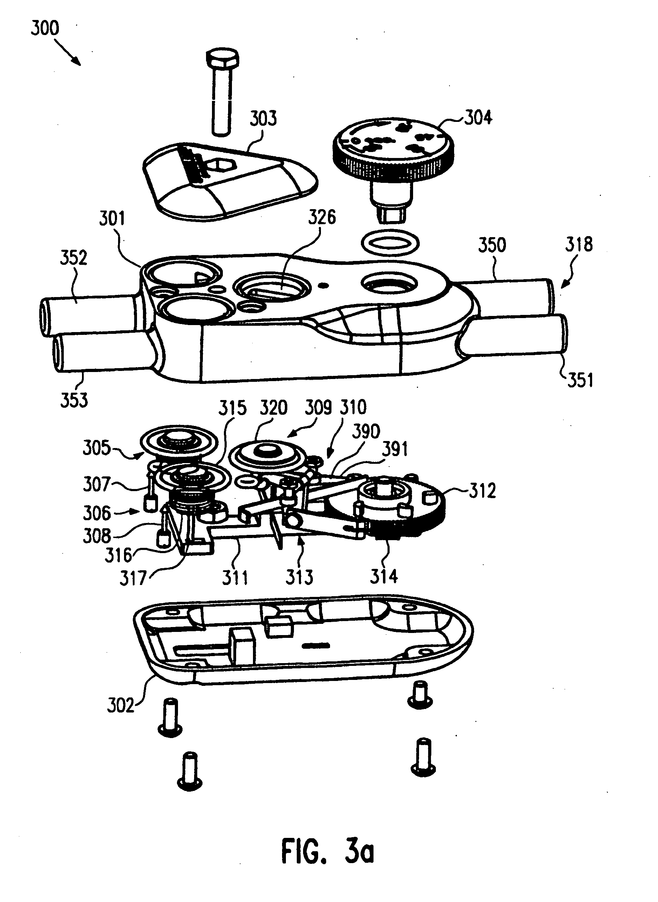

Eine Ausführungsform der Erfindung wird anhand der Fig. 3a bis 3d erläutert.

Fig. 3a zeigt eine schematische Explosionsansicht einer Vorrichtung 300 zur Stimulation eines Euters bei einem Melkvorgang gemäß einer Ausführungsform der vorliegenden Erfindung.

Die Vorrichtung 300 umfasst ein Gehäuse 318. Das Gehäuse 318 umfasst einen oberen Gehäuseteil 301, einen unteren Gehäuseteil 302 und einen Deckel 303. Das Gehäuse 318 weist ein Paar erster Anschlüsse 350, 351 und ein Paar zweiter Anschlüsse 352, 353 auf. Die ersten Anschlüsse 350, 351 sind dafür geeignet, mit einem Pulsator einer Melkmaschine verbunden werden. Die zweiten Anschlüsse 352, 353 sind dafür ausgelegt, mit Melkbechern der Melkmaschine verbunden zu werden.

In dem Gehäuse sind zwei Drosselventile 305, 306 untergebracht. Das Drosselventil 305 ist zwischen den Anschlüssen 350, 352 angeordnet und dafür ausgelegt, einen Gasstrom zwischen den Anschlüssen 350, 352 zu steuern. Entsprechend befindet sich das Drosselventil 306 in Strömungsverbindung mit den anderen beiden Anschlüssen 351, 353 und ist dafür ausgelegt, einen Gasstrom zwischen den Anschlüssen 351, 353 zu steuern.

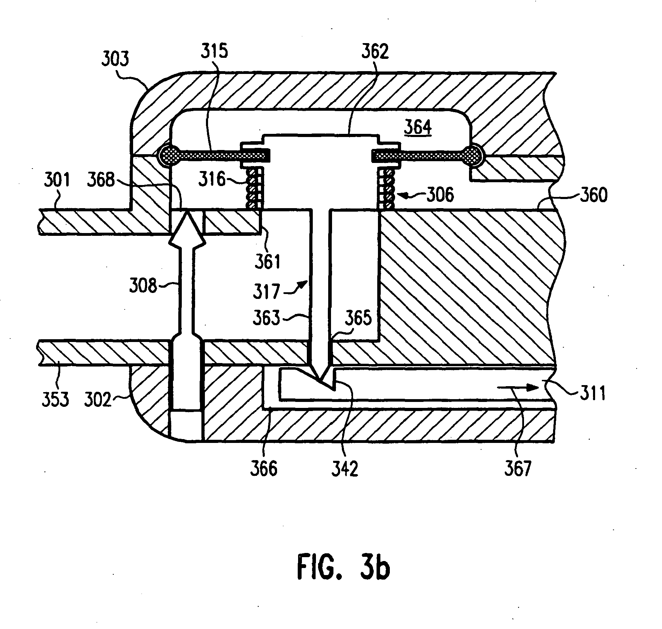

Der Aufbau der Drosselventile 305, 306 wird im Folgenden am Beispiel des Drosselventils 306 erläutert, von dem in Fig. 3b eine schematische Querschnittsansicht gezeigt ist. Das Drosselventil 305 hat im Wesentlichen den selben Aufbau. Das Drosselventil 306 weist eine Membran 315 auf. Die Membran 315 ist an ihrem äußerem Umfang zwischen dem ersten Gehäuseteil 301 und dem Deckel 303 eingeklemmt und wird dadurch an ihrer Position gehalten. In ihrer Mitte ist die Membran 315 mit einem Kolben 317 verbunden. Eine Druckfeder 316 übt auf dem Kolben 317 eine Kraft in Richtung des Deckels 303 aus.

Der Kolben 317 weist einen Kopf 362 und eine Stange 363 auf. Der Kopf 362 ist nahe einer Öffnung 361 angeordnet, die eine Strömungsverbindung zwischen dem zweiten Anschluss 353 und einem Kanal 360, der mit dem ersten Anschluss 351 verbunden ist, herstellt. Je nach der Stellung des Kolbens 317 wird ein Gasstrom durch die Öffnung 361 mehr oder weniger stark durch den Kopf 362 des Kolbens 317 eingeschränkt. Je weiter der Kolben in Richtung auf den Deckel 303 zu verschoben ist, desto geringer ist der Widerstand, dem der Gasstrom durch das Ventil 306 ausgesetzt ist.

Ein Raum 364 oberhalb der Membran 315 kann durch einen Druckausgleichskanal (nicht gezeigt) mit einer Umgebung der Vorrichtung 300 in Strömungsverbindung stehen. In der Verbindung zwischen dem Raum 364 und der Umgebung kann eine Filtermembran aus einem Material, das für Luft, nicht aber für Wasser durchlässig ist, vorgesehen sein. Vorteilhafterweise können dadurch ein Eindringen von Feuchtigkeit in das Innere der Vorrichtung 300 und eine damit einhergehende Verschmutzung von Bauteilen der Vorrichtung 300 vermieden werden. In einer speziellen Ausführungsform der vorliegenden Erfindung kann die Filtermembran aus porösem Teflon oder einer Porotex-Folie bestehen.

So ist die Membran 315 auf einer Seite dem Atmosphärendruck, auf der anderen Seite dem Druck, der in dem Kanal 360 herrscht, ausgesetzt. Beim Betrieb der Vorrichtung 300 ist der Anschluss 351 mit einem Pulsator verbunden, durch den ein periodischer Druckverlauf vorgegeben wird, der zwischen dem Atmosphärendruck und einem Druck, der kleiner als der Atmosphärendruck ist, mit einer Frequenz von etwa 1 Hertz oszilliert.. Wenn der Druck im Anschluss 351 und in dem mit ihm strömungsmäßig verbundenen Kanal 360 kleiner als der Atmosphärendruck ist, wirkt auf die Membran 315 eine Kraft t, die der von der Druckfeder 316 ausgeübten Kraft entgegengesetzt und von dem Deckel 303 weg gerichtet ist.

Je mehr sich der Druck in dem Kanal 360 von dem Atmosphärendruck unterscheidet, um so weiter bewegt sich der Kolben 317 auf die Öffnung 361 zu. Dadurch vergrößert sich der Strömungswiderstand des Ventils 306. Dieser Strömungswiderstand wirkt einer weiteren Verringerung des Drucks in dem Anschluss 353 entgegen. Umgekehrt bewegt sich der Kolben 317 bei einem geringen Druckunterschied zwischen dem Kanal 360 und dem Umgebungsluftdruck von der Öffnung 361 weg, wodurch mehr Gas durch den Anschluss 353 strömen kann. Somit befindet sich das Ventil 306 in einem teilweise geöffneten Zustand, in dem zwar Gas durch das Ventil 306 strömen kann, aber während des Betriebs des Pulsators kein vollständiger Druckausgleich zwischen dem Kanal 360 und dem Anschluss 353 stattfindet. Wenn die Bewegung des Kolbens 317 nicht behindert wird, stellt sich in dem Anschluss 353, der mit dem Pulsraum des Melbechers verbunden ist, ein Druckunterschied zur Umgebung ein, der von der Härte der Druckfeder 316 und der Fläche der Membran 315 abhängt Demnach wirkt in diesem Fall das Drosselventil 306 als ein Druckreglerventil, das dafür ausgelegt ist, in dem Anschluss 353 eine Überschreitung eines vorbestimmten Druckunterschieds zum Atmosphärendruck nicht zuzulassen.

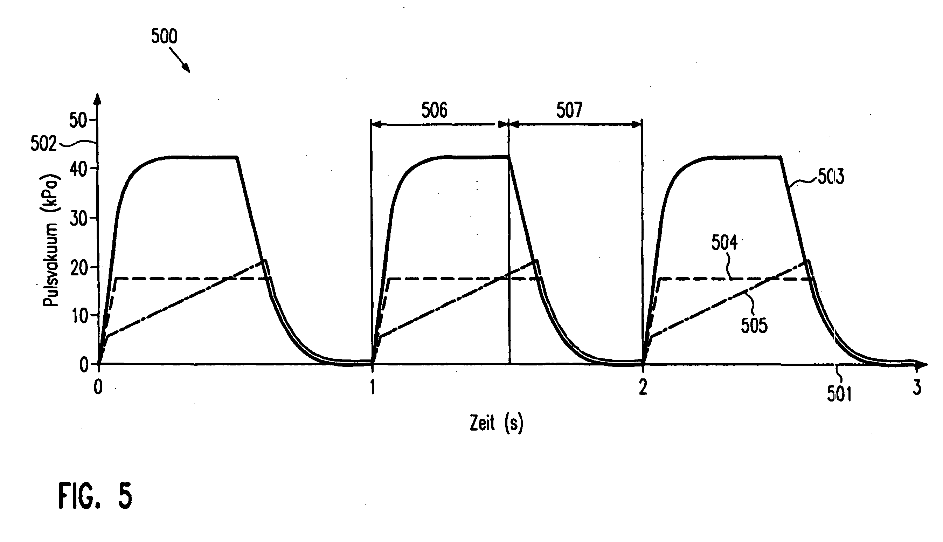

Fig. 5 zeigt eine schematische Skizze von Druckverläufen während einer Vorstimulation mit einer Vorrichtung gemäß der vorliegenden Erfindung.

In einem Koordinatensystem 500 mit einer Zeitachse 501 und einer Druckachse 502 ist der Druckverlauf über der Zeit aufgetragen. Eine erste Kurve 503 stellte den zeitlichen Verlauf des vom Pulsator bereitgestellten Pulsvakuums dar. Das Pulsvakuum ist der Druckunterschied zwischen dem ersten Anschluss 351 und der Umgebung der Vorrichtung 300. Am Beginn jedes Druckpulses fällt während einer Saugphase 506 der Druck auf einen Wert von ca. 40 kPa unterhalb des Atmosphärendrucks ab. Während einer sich daran anschließenden Entlastungsphase steigt der Druck an, bis der Atmosphärendruck im wesentlichen wieder erreicht ist. Jeder Pulszyklus kann eine Dauer von ungefähr einer Sekunde haben. Bei vielen Pulsatoren ist die Dauer der Saugphase länger als die der Entlastungsphase.

Eine zweite Kurve 504 stellt den Druckverlauf dar, der sich im zweiten Anschluss 353 einstellt, wenn die Bewegungsfreiheit des Kolbens 307 nicht eingeschränkt wird. Am Beginn jedes Druckpulses folgt der Druck im Anschluss 353 solange im Wesentlichen dem vom Pulsator vorgegebenen und im Kanal 360 herrschenden Druck, bis der vorbestimmte Druckunterschied, der in manchen Ausführungsformen der Erfindung einen Betragswert von ungefähr 17 bis 22 kPa haben kann, erreicht ist. In einer speziellen Ausführungsform der Erfindung kann sich der Betragswert des vorbestimmten Druckunterschieds in einem Bereich von ungefähr 18 bis 20 kPa befinden. Anschließend bleibt der Druck so lange konstant, bis die Differenz zwischen dem vom Pulsator vorgegebenen Druck und dem Atmosphärendruck den vorbestimmten Druckunterschied wieder unterschreitet. Daraufhin folgt der Druck im zweiten Anschluss 353 wieder im Wesentlichen dem vom Pulsator vorgegebenen Druck. Somit pulsiert der Unterdruck im Anschluss 353 zwischen null und ungefähr 22 kPa. Entsprechend bewegt sich der Zitzengummi zwischen einer ganz geschlossenen (voller Atmosphärendruck im Pulsraum) und einer weniger geschlossenen (verringerter Unterdruck im Pulsraum) Position. Bei diesem Pulskurvenverlauf findet im wesentlichen noch kein Abmelken von Milch statt. Dennoch werden die Zitzen durch die Druckpulse des Pulsators leicht massiert, was für das Setzen vollwertiger Stimulationsreize völlig ausreichend ist.

Der Raum 364 oberhalb der Membran 315 muss nicht mit der Umgebung der Vorrichtung 300 in Verbindung stehen. In anderen Ausführungsformen kann der Raum 364 über einen Verbindungskanal mit dem ersten Anschluss 351 und damit mit dem Kanal 360 in Verbindung stehen. In dem Verbindungskanal ist ein Drosselelement, beispielsweise eine Düse, vorgesehen, das einer Gasströmung zwischen dem Raum 364 und dem ersten Anschluss 351 einen relativ großen Widerstand entgegensetzt. Dadurch fällt der Druck in dem Raum 364 nur langsam ab, wenn von dem Pulsator ein Druckpuls bereitgestellt wird. Wenn die Bewegung des Kolbens 317 nicht behindert wird, stellt sich in dem Anschluss 353 ein Druck ein, der sich von dem Druck im Raum 364 um einen vorbestimmten Wert unterscheidet. Der vorbestimmte Wert hängt von der Härte der Druckfeder 316 und der Fläche der Membran 315 ab. Aufgrund des langsamen Druckabfalls im Raum 364 nimmt der Druck im Anschluss 353 während eines Druckpulses vom Pulsator nur langsam ab, wie in Fig. 5 durch die Kurve 505 angedeutet. Dadurch kann eine besonders schonende Vorstimulation des Euters des gemolkenen Tiers erreicht werden.

Die Stange 363 des Kolbens 317 ragt durch eine Öffnung 365 im ersten Gehäuseteil 301 in einen Raum 366 hinein, der zwischen dem ersten Gehäuseteil 301 und dem zweiten Gehäuseteil 302 ausgebildet ist und in dem sich ein Schieber 311 befindet. Der Schieber 311 ist in Richtung eines Pfeils 367 und der dazu entgegengesetzten Richtung beweglich und weist an einer der Stange 363 zugewandten Seite eine keilförmige Vertiefung 342 auf. Je nach der Stellung des Schiebers 311 wird die Bewegungsfreiheit der Stange 363 und damit die Bewegungsfreiheit des gesamten Kolbens 317 durch den Schieber 311 mehr oder weniger stark eingeschränkt, und zwar umso mehr, je weiter der Schieber 311 in Richtung des Pfeils 367 verschoben ist. Damit findet eine mechanische Hemmung der Wirkung des Ventils 306 statt.

Je weiter der Schieber 311 in Richtung des Pfeils 367 verschoben ist, umso mehr wird der Kolben 317 daran gehindert, sich auf die Öffnung 361 zu zu bewegen und den Gasstrom durch das Drosselventil 306 einzuschränken. In Folge dessen wird das Drosselventil 306 vollständig geöffnet und der Druck im Anschluss 353 folgt im wesentlichen dem vom Pulsator vorgegebenen Druck.

Das vollständige Öffnen des Ventils 306 muss nicht, wie oben beschrieben, durch eine mechanische Einschränkung der Bewegungsfreiheit des Kolbens 317 bewirkt werden. In anderen Ausführungsformen der vorliegenden Erfindung kann der Schieber 311 dafür ausgelegt sein, bei einer Verschiebung in Richtung des Pfeils 367 eine Verbindung zwischen dem Raum 364 oberhalb der Membran 315 und dem Kanal 360 freizugeben. Gleichzeitig kann der Verbindungskanal zwischen dem Raum 364 und der Umgebung der Vorrichtung 300 durch den Schieber 311 verschlossen werden. Somit ist nach der Verschiebung des Schiebers 311 der Druck im Raum 364 im wesentlichen gleich dem Druck im Kanal 360 und die Membran wird nicht mehr durch den Gasdruck zur Öffnung 361 hin gedrückt. Die Druckfeder 316 übt jedoch weiterhin eine Kraft auf den Kopf 362 des Kolbens 317 aus, aufgrund derer sich der Kopf 362 von der Öffnung 361 weg bewegt und die Öffnung 361 freigibt.

Zusätzlich zur Öffnung 361 kann in dem Ventil 306 eine Bypassöffnung 368 vorgesehen sein, die ebenfalls eine Strömungsverbindung zwischen dem Anschluss 353 und dem Kanal 360 bereitstellt. Die Bypassöffnung 368 kann durch eine Stellschraube 308 ganz oder teilweise freigegeben oder verschlossen werden. Durch Drehen an der Stellschraube 308 kann somit eine Feineinstellung des Drucks im Anschluss 353 durchgeführt werden.

Eine Feineinstellung des Drucks im Kanal 360 muss nicht durch teilweises Öffnen oder Schließen einer Bypassöffnung geschehen. In anderen Ausführungsformen der vorliegenden Erfindung kann stattdessen die Druckfeder 316 durch ein verstellbares elastisches Element ersetzt werden. Das verstellbare elastische Element kann beispielsweise eine Feder umfassen, die an einem Ende mit einer Stellschraube und am anderen Ende mit einem Hebel, an dem der Kolben 317 befestigt ist, verbunden ist. Wenn sich der Kolben 317 bewegt, dreht sich der Hebel um einen Drehpunkt. Durch den Hebel wird eine Kraft, die von der Feder ausgeübt wird, auf den Kolben 317 übertragen. Durch Verstellen der Stellschraube kann die Feder auf den Hebel zu oder von diesem weg bewegt werden, wodurch sich die von der Feder auf den Hebel ausgeübte Kraft verändert. Dadurch ändert sich der Druck, der sich im Anschluss 353 einstellt.

In weiteren Ausführungsformen der Erfindung kann das verstellbare elastische Element eine Blattfeder umfassen. Die Blattfeder ist an einem Ende an dem Kolben 317 befestigt. Das andere Ende der Blattfeder ist durch eine Befestigung mit dem Gehäuse 318 verbunden. Zwischen der Befestigung und dem Kolben 317 wird die Blattfeder durch eine Auflage gehalten, die längs der Blattfeder verschiebbar ist. Wenn sich der Kolben 317 bewegt, wird ein Teil der Blattfeder zwischen dem Kolben 317 und der Auflage durchgebogen. Je weiter die Auflage zum Kolben 317 hin verschoben wird, umso kürzer ist der durchgebogene Teil der Blattfeder und desto größer wird eine Federhärte des durchgebogenen Teils der Blattfeder. Somit kann durch Verschieben der Auflage der Druck, der sich im Anschluss 353 einstellt, gesteuert werden.

Die Vorrichtung 300 umfasst ferner eine Steuervorrichtung 309. Die Steuervorrichtung 309 umfasst ein von einer Membran 320 abgeschlossenes Volumen 326, das sich in der in Fig. 3a gezeigten Ausführungsform auf einer dem Deckel 303 zugewandten Seite der Membran 320 befindet und von dem Deckel 303 abgeschlossen wird. Das Volumen 326 befindet sich in Strömungsverbindung mit einem der ersten Anschlüsse 350, 351, beispielsweise dem Anschluss 351. Eine von dem Deckel 303 abgewandte Außenseite der Membran 320 ist dem Atmosphärendruck ausgesetzt. In einer Verbindung zwischen der Außenseite der Membran 320 und der Umgebung kann eine Filtermembran aus einem luftdurchlässigen, aber für Wasser undurchlässigen Material vorgesehen sein, um ein Eindringen von Feuchtigkeit und Schmutz in die Vorrichtung 300 zu verhindern, In einer Ausführungsform der vorliegenden Erfindung kann für die Verbindung der Außenseite der Membran 320 mit der Umgebung und für die Verbindung des Raums 364 mit der Umgebung eine gemeinsame, von einer Filtermembran abgeschlossene Belüftungsöffnung vorgesehen sein. Die Membran 320 ist elastisch und kann durch Druckunterschiede in dem von ihr abgeschlossenen Volumen 326 bewegt werden.

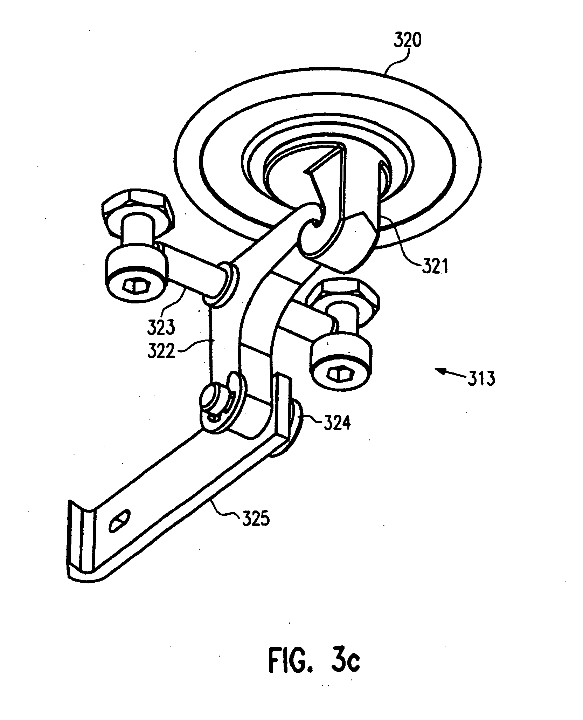

Eine Übertragungsvorrichtung 313 ist dafür ausgelegt, die durch Druckunterschiede im Volumen 326 verursachten Bewegungen der Membran 320 in eine Drehbewegung eines Zahnrads 312 umzusetzen. Eine schematische Perspektivansicht der Übertragungsvorrichtung 313 in einer Ausführungsform der Erfindung ist in Fig. 3c gezeigt.

Die Übertragungsvorrichtung 313 umfasst einen Hub 321, der an der Außenseite der Membran 320 befestigt ist. Der Hub 321 greift in einen abgewinkelten Hebel 322 ein, der um eine Achse 323 drehbar gelagert ist. Ein Ende des Hebels 322 ist durch eine Welle 324 mit einem hinteren Ende eines Hakens 325 verbunden. Wenn der Druck im Volumen 326 in Folge eines vom Pulsator gelieferten Unterdruckpulses abfällt, wird der mittlere Teil der Membran 320 ein Stück weit in das Volumen 326 hineingezogen. Dadurch bewegt sich der Hub 321 auf den Deckel 303 zu und der Hebel 322 wird um die Achse 323 gedreht. Dabei zieht der Hebel 322 den Haken 325 zurück. Nimmt der Druck in dem von der Membran 320 abgeschlossenen Volumen wieder zu, bewegt sich der Haken 325 wieder nach vorne. Die Bewegung des Hakens 325 nach vorne wird zusätzlich durch eine Kraft, die von einer Zugfeder 314 ausgeübt wird, unterstützt.

Die Übertragungsvorrichtung muss nicht einen Hub 321, der in einen abgewinkelten Hebel 322 eingreift, umfassen. In anderen Ausführungsformen der vorliegenden Erfindung kann die Übertragungsvorrichtung stattdessen eine Schnur, die über eine Umlenkrolle läuft, oder einen Gelenkhebel umfassen.

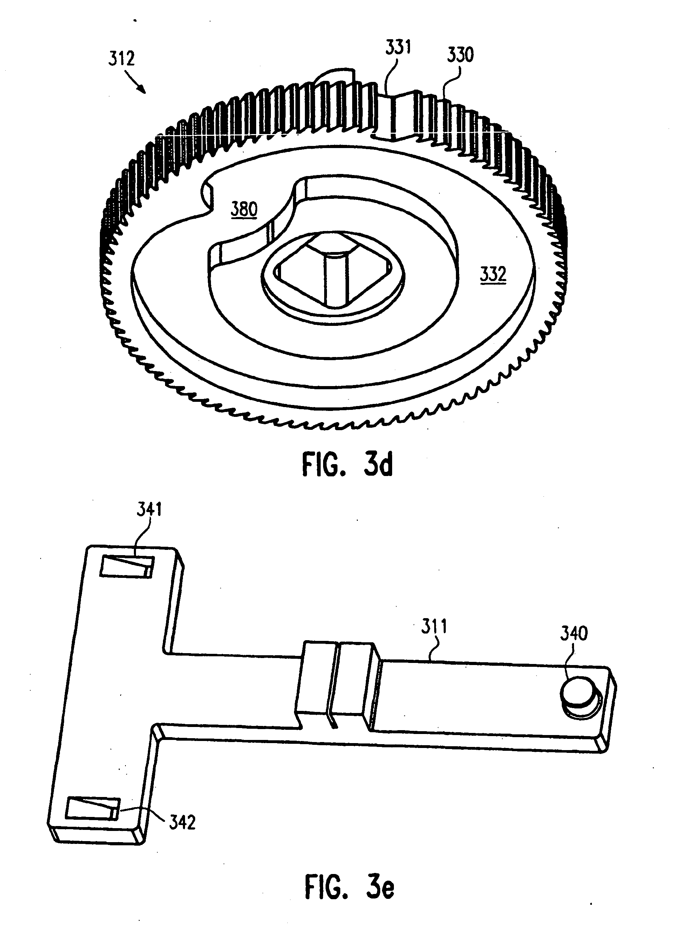

Eine schematische Perspektivansicht des Zahnrads 312 ist in Fig. 3d gezeigt. Ein vorderes Ende des Hakens 325 greift in Zähne 330 des Zahnrads 312 ein. Die Zähne 330 haben eine asymmetrische Form. Diese ist so ausgelegt, dass ein Zahn, der sich neben dem vorderen, gebogenen Ende des Hakens 325 befindet, auf das vordere Ende des Hakens 325 zu geneigt ist. Wenn sich der Haken 325 zurück bewegt, hält der Haken den Zahn fest und zieht diesen zurück. Dadurch dreht sich das Zahnrad 312 ein Stück weit.

Wenn sich der Haken 325 wieder nach vorne bewegt, gleitet der Haken 325 wegen der asymmetrischen Form des nächsten Zahns auf dem nächsten Zahn ohne diesen zu ergreifen, so dass das Zahnrad nicht mehr zurückgedreht wird. Um die Vorwärtsbewegung des Hakens 325 über den nächsten Zahn hinweg zu erleichtern, kann der Haken 325 aus einem elastischen Material wie beispielsweise Federstahl oder einem elastischen Kunststoff wie hochpolymerisiertem Polyoxymethylen (POM) geformt sein.

Zusätzlich können in der Vorrichtung 300 Sperrklinken 390, 391 vorgesehen sein, die ein Zurückdrehen des Zahnrads 312 verhindern. Jede der Sperrklinken 390, 391 kann mit einem den Fachleuten bekannten Anschlag (nicht gezeigt) ausgestattet sein, der dafür ausgelegt ist, ein gewaltsames Durchbiegen der Sperrklingen beim Zurückdrehen des Zahnrads 312 zu verhindern. Die Sperrklinken 390, 391 können aus einem elastischen Material, beispielsweise Federstahl, oder einem elastischen Kunststoff wie hochpolymerisiertem Polyoxymethylen (POM) geformt sein.

Abmessungen der Bauteile der Übertragungsvorrichtung 313 und der Zähne 330 des Zahnrads 312 können so ausgelegt sein, dass sich das Zahnrad 312 bei jedem Zurückziehen des Hakens 325 um einen Zahn weiterdreht. Das Zahnrad 312 kann eine Lücke 331 aufweisen, in der keine Zähne vorhanden sind. Da der Haken 325 in der Lücke 331 keine Zähne greifen kann, hält die Drehung des Zahnrads 312 an, sobald sich das Zahnrad 312 in einer Stellung befindet, in der die Lücke 331 dem Haken 325 gegenüber liegt.

Fig. 3e zeigt eine schematische Perspektivansicht des Schiebers 311. Der Schieber 311 hat eine T-förmige Gestalt. Er weist zwei keilförmige Vertiefungen 341, 342 auf. Wie oben ausgeführt, greift in die Vertiefung 342 die Stange 363 des Kolbens 317 im Drosselventil 306 ein. Entsprechend greift in die Vertiefung 341 eine Stange eines Kolbens im Drosselventil 305 ein.

Auf einer den Drosselventilen 305, 306 abgewandten Seite weist der Schieber 311 einen Vorsprung 340 auf. Dieser greift in eine Rille 332, die auf einer dem zweiten Gehäuseteil 302 gegenüberliegenden Seite des Zahnrads 312 angebracht ist, ein. Wenn sich das Zahnrad 312 dreht, wird der Vorsprung 340 des Schiebers 311 von der Rille 332 geführt.

Ein Abstand der Rille 332 von einem Mittelpunkt des Zahnrads 312 kann entlang des Umfangs des Zahnrads 312 variieren, Insbesondere kann die Rille 332 einen Bereich 380 umfassen, der sich in einem geringeren Abstand zum Mittelpunkt des Zahnrads 312 befindet als der Rest der Rille 332. Der Bereich 380 kann so angeordnet sein, dass sich der Vorsprung 340 des Schiebers 311 in dem Bereich 380 der Rille 332 befindet, wenn der Haken 325 in die Lücke 331 eingreift und die Drehbewegung des Zahnrads 312 anhält. Der Rest der Rille 332 kann sich in einem größeren Abstand zum Mittelpunkt des Zahnrads 312 befinden. Die Abstände des Bereichs 380 und des Rest der Rille 332 vom Mittelpunkt des Zahnrads 312 können so ausgelegt sein, dass sich die Kolben der Ventile 305, 306 im wesentlichen ungehindert bewegen können, so lange sich der Vorsprung 340 des Schiebers 311 außerhalb des Bereichs 380 befindet. Wenn der Bereich 380 den Vorsprung 340 erreicht, wird der Schieber in Richtung des in Fig. 3b gezeigten Pfeils 367 verschoben und die Ventile 305, 306 werden geöffnet.

Die Vorrichtung 300 muss keinen separaten Schieber 311 aufweisen. In einer anderen Ausführungsform kann die Rille 332 im Zahnrad 312 einen immer gleichen Abstand von dessen Zentrum aufweisen. Das Ventil 306 ist im Verhältnis zum Zahnrad 312 so angeordnet, dass das Ende der Stange 363 des Ventils 306 direkt in diese Rille vorsteht. Die Tiefe der Rille verringert sich keilförmig in dem Bereich, in dem die Bewegung des Zahnrad 312 anhält, weil der Haken 325 in die Lücke 331 eingreift. In diesem Bereich wird durch die verringerte Tiefe der Rille die Bewegungsfreiheit der Stange 363 des Kolbens 317 behindert und damit das Ventil geöffnet Während der Umlauf des Zahnrades 312 findet keine Behinderung der Bewegungsfreiheit des Ventils 306 statt.

Die Vorrichtung 300 umfasst ferner eine Einstellvorrichtung. Die Einstellvorrichtung umfasst einen Drehknopf 304. Der Drehknopf 304 ist mit dem Zahnrad 312 verbunden. Somit kann das Zahnrad 304 durch Drehen an dem Drehknopf 304 gedreht werden.

Beim Betrieb wird die Vorrichtung zwischen den Pulsator und die Melkbecher einer Melkmaschine ähnlich der oben mit Bezug auf Fig. 1 beschriebenen eingefügt. Zu diesem Zweck können die Steuerleitungen 121, 122 jeweils mit einem der ersten Anschlüsse 350, 351 verbunden werden. Ein weiteres Paar Leitungen verbindet jeweils einen der zweiten Anschlüsse 352, 353 mit denjenigen Anschlüssen des Melkzeugs 100, an denen in Fig. 1 die Steuerleitungen 121, 122 angeschlossen sind.

Zuerst wird die Melkmaschine eingeschaltet. Unmittelbar vor dem Ansetzen des Melkzeugs an das Euter des nächsten Tiers wird das Zahnrad 312 durch Drehen an dem Drehknopf 304 im Uhrzeigersinn in eine Position gebracht, in der sich der Haken 325 eine vorbestimmte Anzahl von Zähnen vor der Lücke 331 befindet. Der Pulsator der Melkmaschine erzeugt Druckpulse, die auf die Membran 320 wirken. Dadurch bewegt sich die Membran 320. Durch die Übertragungsvorrichtung wird bei jedem der Druckpulse das Zahnrad 312 um einen Zahn weitergedreht. Erst wenn der Haken 325 die Lücke 331 erreicht hat, bleibt das Zahnrad stehen. Da der Pulsator seine Druckpulse mit einer vorbestimmten Frequenz abgibt, dreht sich das Zahnrad 312 solange, bis der Haken 325 die Lücke 331 erreicht hat, mit einer vorbestimmten Geschwindigkeit.

Nach dem Einstellen des Drehknopfes 304 befindet sich der Vorsprung 340 des Schiebers 311 außerhalb des Bereichs 380 der Rille 332 und die Kolben der Ventile 305, 306 können sich im Wesentlichen frei bewegen. Dadurch stellt sich in der Saugphase des Pulsators in den zweiten mit den Pulsräumen verbundenen Anschlüssen 352, 353 der durch die Bauart der Ventile vorgegebene Unterdruck ein, der kleiner als der vom Pulsator vorgegebene Unterdruck und kleiner als der im Inneren der Zitzengummis 105-108 erzeugte Unterdruck ist. Dadurch werden die Zitzengummis 105-108 von den Wänden der Melkbecher 101-104 weg gedehnt und so stark auf die Zitzen des Tiers gedrückt, dass der Strichkanal gerade noch geschossen bleibt. Demnach findet im wesentlichen kein Abmelken von Milch statt. Dennoch werden die Zitzen durch die Druckpulse des Pulsators leicht massiert, wodurch das vollwertige Setzen der Reize für die Vorstimulation des Euters des Tieres stattfindet.

Beim Betrieb der Vorrichtung 300 ist es wichtig, dass diese vom Melker in den Zustand der Vorstimulation versetzt wird, bevor die Melkbecher an die Zitzen angesetzt werden und nicht etwa erst kurz nach dem Ansetzen. Der Grund ist folgender: Bei eingeschalteter Melkmaschine baut sich erst in dem Moment das Melkvakuum im Inneren des Zitzengummis auf, in dem die Zitze dichtend in diesen eingeführt worden ist. Vor der Einführung herrscht im Inneren des Zitzengummis Atmosphärendruck, während im abgeschlossenen Pulsraum zwischen Zitzengummi und Melkbecherwand der vom Pulsator über die Steuerleitungen 121, 122 bereitgestellte periodische Druckverlauf zwischen Atmosphärendruck und einem Unterdruck anliegt. Die Zitzengummiwandung ist also im Zustand vor dem Einführen in der Entlastungsphase keinem Duckunterschied ausgesetzt, sodass der Zitzengummi seine ursprüngliche offene Stellung einnimmt. In der Saugphase des Pulsators hingegen herrscht im noch nicht angesetzten Melkbecher ein Druckunterschied, der die Zitzengummiwandung nach außen zur Melkbecherwandung hin dehnt. Setzt man einen mit dem Druckverlauf eines normalen Pulsators betriebenen Melkbecher an eine nicht vorstimulierte und damit noch schlaffe Zitze an, hat dieser die Neigung, die Zitze in der jeweiligen Saugphase besonders tief in den Zitzengummiinnenraum hineinzusaugen, bevor sich zwischen der Zitzengummiwandung und der Zitzenhaut ein dichtender Kontakt, sowie eine so große Reibung einstellen kann, dass diese einem weiteren Hineinsaugen der Zitze in den Melkbecher entgegenwirken kann.
Das zu tiefe Einsaugen der Zitze beim Ansetzen des Melkbechers, und damit die gefürchtete Blindmelksituation zu Beginn des Melkens, kann vermieden werden, wenn die Saugphase des Pulsators durch die erfindungsgemäße Vorrichtung bereits vor dem Ansetzen der Melkbecher auf einen reduzierten Unterdruck begrenzt wird. So stellt sich die Abdichtung und Reibung zwischen Zitzenhaut und Zitzengummiwandung beim Ansetzen so schnell ein, dass der Melkbecher nach dem Ansetzen automatisch eine optimale Melkposition an der Zitze einnimmt. Während der Zeit der Vorstimulation wird durch die nervösen Stimulationsreize des sanft pulsierenden Zitzengummis die Durchblutung der Zitze verstärkt, wodurch die Zitze vom ursprünglich schlaffen in einen steiferen Zustand verändert, was die richtige Position des Melkbechers an der Zitze weiter stabilisiert.

Wenn der Bereich 380 der Rille 332 den Vorsprung 340 des Schiebers 311 erreicht hat, wird der Schieber 311 in Richtung des Pfeils 367 verschoben und die Ventile 305, 306 werden geöffnet. Dadurch kann der vom Pulsator bereitgestellte Unterdruck im Wesentlichen ungehindert auf die Zitzengummis 105-108 wirken und aus dem Euter des Tiers wird Milch abgemolken. Zu diesem Zeitpunkt erreicht auch der Haken 325 die Lücke 331, so dass der Vorsprung in dem Bereich 380 bleibt und die Ventile 305, 306 während des Rests des Melkvorgangs geöffnet bleiben.

Die Zeitdauer, während der sich die Kolben der Ventile 305, 305 frei bewegen können und damit die Dauer der Vorstimulation wird durch die Stellung des Zahnrads 312 beim Ansetzen des Melkzeuges, die über den Drehknopf 304 eingestellt werden kann, und die Frequenz der vom Pulsator bereitgestellten Druckpulse bestimmt. Da die Frequenz der Druckpulse im Wesentlichen konstant und in der Größenordnung von ungefähr 1 Hz ist, kann so eine Vorstimulation mit einer vorbestimmten Dauer durchgeführt werden.

Wie oben ausgeführt, dreht sich das Zahnrad 312 bei jedem vom Pulsator bereitgestellten Druckpuls um einen Zahn weiter. Demnach ist die Dauer der Vorstimulation im Wesentlichen gleich einem Produkt aus der Dauer eines Druckpulses und der Anzahl der Zähne, die sich in der Ausgangstellung des Zahnrads 312 beim Ansetzen des Melkzeuges zwischen dem Hebel 325 und der Lücke 331 befinden. Die maximale Dauer der Vorstimulation wird durch die Gesamtzahl der Zähne des Zahnrads 312 bestimmt. In einer speziellen Ausführungsform der vorliegenden Erfindung weist das Zahnrad 312 90 Zähne auf.

Zum Einstellen der Vorstimulationszeit kann das Zahnrad 312 in der selben Richtung gedreht werden, in der es sich auch beim Betrieb der Vorrichtung 300 dreht. Ein Drehen des Zahnrads 312 und des mit ihm verbundenen Drehknopfs 304 in der Gegenrichtung wird durch die Sperrklinken 390, 391 verhindert. Wird der Drehknopf 304 um einen großen Winkel gedreht, wird eine relativ kurze Vorstimulationszeit eingestellt, während eine Drehung des Drehknopfs 304 um einen kleineren Winkel zu einer längeren Vorstimulationszeit führt. Da in der Praxis allgemein eine Neigung zu kurzen Vorstimulationszeiten festzustellen ist, hat es sich als vorteilhaft erwiesen, kürzere Vorstimulationszeiten durch bewusstes stärkeres Verdrehen des Drehknopfes 304 einzustellen.

In manchen Ausführungsformen der vorliegenden Erfindung kann der Drehknopf 304 mit einem Schlagwerk verbunden sein, das dafür ausgelegt ist, bei einer Drehung des Drehknopfs 304 um einen Winkel, der einer bestimmten Vorstimulationszeit entspricht, ein akustisches und/oder in der Hand spürbares Signal zu erzeugen. Beispielsweise kann das Schlagwerk dafür geeignet sein, beim Einstellen einer Vorstimulationszeit von 30 Sekunden, 60 Sekunden und/oder 90 Sekunden ein Signal zu erzeugen. Vorteilhafterweise kann dadurch die für das individuelle Tier adäquate Vorstimulationszeit bequem und blind eingestellt werden. Außerdem wird die Wahrscheinlichkeit einer falschen Einstellung der Vorstimulationszeit verringert.

Nach neuesten wissenschaftlichen Erkenntnissen wird die adäquate Vorstimulationszeit für ein individuelles Tier von dessen Grad der Euterfüllung bestimmt. Der Euterfüllungsgrad ist das Verhältnis zwischen der Milchmenge, die vor dem Melken im Euter vorhanden ist und der maximalen Kapazität des Euters. Der Grad der Euterfüllung wird einerseits von der Zeit, die seit dem letzen Melken vergangen ist und andererseits vom Laktationsstatus, also der Zeit nach der Geburt des letzten Jungtieres, beeinflusst. Je geringer der Euterfüllungsgrad ist, desto länger muss die Vorstimulationszeit sei. Für Kühe können Vorstimulationszeiten im Bereich zwischen 90 und 30 Sekunden als adäquat betrachtet werden. 60 Sekunden gelten als Standardmaß.

Größe und Gewicht der Vorrichtung 300 können so ausgelegt sein, dass die Vorrichtung 300 bequem in einer Hand gehalten werden kann. Insbesondere kann die Vorrichtung 300 mit einer Hand umfassbar sein. Dies ist insbesondere dann der Fall, wenn ein durchschnittlicher Benutzer, der die Vorrichtung 300 so in der Hand hält, dass der zweite Gehäuseteil 302 seiner Handfläche zugewandt ist, mit den Fingern noch den Rand des Deckels 303 und/oder des Drehknopfs 304 berühren kann. Dabei umschließt die Hand des Benutzers mehr als die Hälfte des Umfangs der Vorrichtung 300. So kann der Benutzer die Vorrichtung 300 auch dann, wenn sie nass oder verschmutzt ist, sicher festhalten. In manchen Ausführungsformen der Erfindung kann die Größe der Vorrichtung 300 in etwa der eines Handseifenstücks entsprechen. In einer speziellen Ausführungsform der vorliegenden Erfindung kann die Vorrichtung 300 eine Gesamtlänge von nicht mehr als ungefähr 15 cm, gemessen von den Enden der ersten Anschlüsse 350, 351 bis zu den Enden der zweiten Anschlüsse 352, 352, und ein Gewicht von nicht mehr als 150 Gramm aufweisen.

Die Vorrichtung 300 kann in der Nähe des Melkzeug 100 angebracht werden. Vorteilhafterweise ist sie dann für den Bediener der Melkmaschine leicht erreichbar, wenn er das Melkzeug dem zu melkenden Tier anlegt. Dadurch kann die Dauer der Vorstimulation eingestellt werden, ohne dass sich der Bediener von dem Tier entfernen muss.

Die Vorrichtung 300 kann zusammen mit einem herkömmlichen Pulsator verwendet werden. Die spezifische Pulscharakteristik des vorhandenen Pulsators wird durch den Einbau der Vorrichtung 300 in der eigentlichen Melkphase nicht verändert. Außerdem kann die Vorrichtung 300 aufgrund ihrer relativ einfachen Bauweise kostengünstig hergestellt werden. Somit sind vorteilhafterweise keine hohen Investitionen erforderlich, um vom Melken ohne maschinelle Vorstimulation auf das Melken mit maschineller Vorstimulation umzustellen.

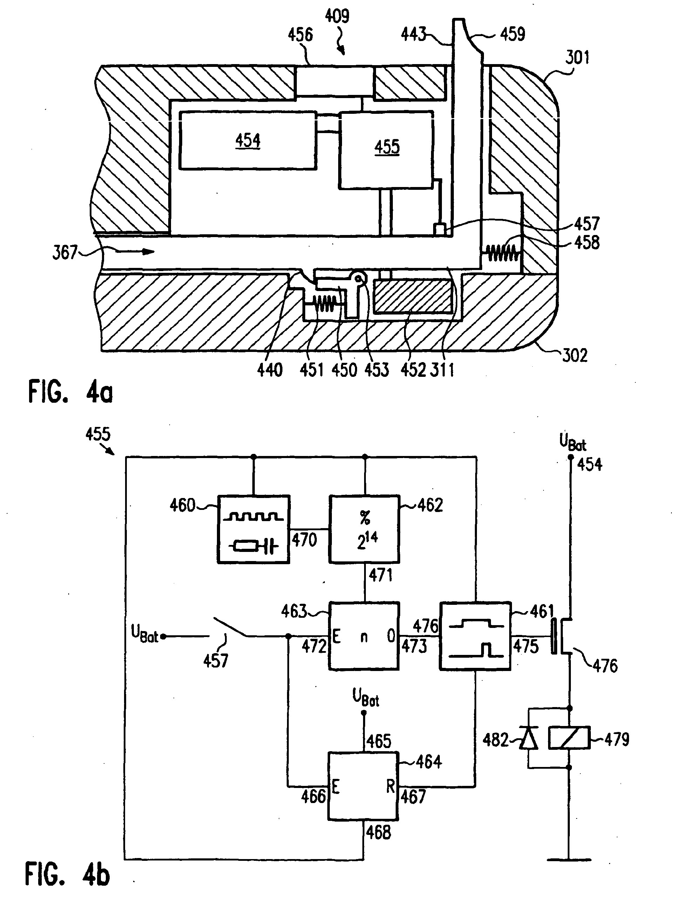

Die Steuervorrichtung 309 der Vorrichtung 300 zur Stimulation eines Euters bei einem Metkvorgang muss nicht wie oben beschrieben aufgebaut sein. Fig. 4 zeigt eine schematische Querschnittsansicht einer Steuervorrichtung 409, die anstelle der Steuervorrichtung 309 verwendet werden kann. Die Steuervorrichtung 409 umfasst einen elektronischen Schaltkreis 455, der durch eine Stromquelle 454 mit elektrischem Strom versorgt wird. Die Stromquelle 454 kann beispielsweise eine Batterie umfassen. In einer speziellen Ausführungsform der vorliegenden Erfindung kann der Schaltkreis 455 einen elektronischen Zeitgeber, einen Mikroprozessor, einen Speicher und/oder eine Schaltvorrichtung umfassen. Die Schaltvorrichtung kann beispielsweise in Form eines Relais vorgesehen sein und dafür ausgelegt sein, einen elektrischen Strom von der Stromquelle 454 zu einer Spule 452 zu schalten. Der Schaltkreis 455 kann dafür ausgelegt sein, den elektrischen Strom zur Spule 452 bei Empfang eines Signals vom elektronischen Zeitgeber einzuschalten.

Gegenüber der Spule 452 ist ein abgewinkelter Hebel 450 angeordnet, der um eine Achse 453 drehbar gelagert ist. Der Hebel 450 kann aus einem ferromagnetischen Material, beispielsweise einer eisenhaltigen Legierung, bestehen. In anderen Ausführungsformen kann an einem der Spule 452 zugewandten ersten Arm des Hebels 450 ein Plättchen aus einem ferromagnetischen Material befestigt sein. Wenn ein elektrischer Strom durch die Spule 452 fließt, wird in der Spule 452 ein magnetisches Feld erzeugt, durch das der erste Arm des Hebels 450 zu der Spule 452 hingezogen wird. Der Spule 452 gegenüber ist eine Zugfeder 451 angeordnet, die dafür ausgelegt ist, auf den ersten Arm des Hebels 450 eine der magnetischen Kraft entgegengerichtete Kraft auszuüben. Dadurch wird der erste Arm des Hebels 450 von der Spule 452 weggezogen, wenn der Strom durch die Spule 452 ausgeschaltet ist.

Eine Zugfeder 458 ist dafür ausgelegt, auf den Schieber 311 eine Kraft in Richtung des Pfeils 367 auszuüben. An einer dem unteren Gehäuseteil 302 zugewandten Seite des Schiebers 311 ist ein Vorsprung 440 angebracht. Ein Abstand zwischen dem Schieber 311 und dem Hebel 450 ist so gewählt, dass der Vorsprung 440 an dem zweiten Arm des Hebels 450 anstößt, wenn der erste Arm des Hebels 450 nicht von der Spule 452 angezogen wird, während sich der Vorsprung 440 über den zweiten Arm des Hebels 450 hinweg bewegen kann, solange die Spule 452 den ersten Arm des Hebels 450 anzieht. Dadurch kann sich der Schieber 311, der auf die Drosselventile 305, 306 einwirkt, in Richtung des Pfeils 367 bewegen, wenn der Strom durch die Spule 452 eingeschaltet ist. Somit sind die Drosselventile 305, 306 elektrisch zwischen dem teilweise geöffneten Zustand und dem geöffneten Zustand schaltbar.

An einer dem ersten Gehäuseteil 301 zugewandten Seite des Schiebers 311 ist ein Griff 443 angebracht. Ein Teil 459 des Griffs 443 ragt nach oben aus dem ersten Gehäuseteil 301 heraus. Dadurch kann der Schieber 311 von Hand verschoben werden. Ein Schalter 457 ist dafür ausgelegt, bei einer Verschiebung des Schiebers 311 entgegen der Richtung des Pfeils 367 ein Signal an den Schaltkreis 455 auszugeben. Dies kann beispielsweise durch Öffnen oder Schließen eines Stromkreises geschehen.

Der Schaltkreis 455 ist mit einer Bedienvorrichtung 409 verbunden. Die Bedienvorrichtung 409 kann an einer Oberseite des oberen Gehäuseteils 301 vorgesehen sein und ein Display und/oder eine oder mehrere Tasten aufweisen. Beispielsweise kann das Display eine Flüssigkristallanzeige umfassen. Durch die Tasten der Bedienvorrichtung 409 kann eine Zeit, während der die Vorstimulation durchgeführt werden soll, in den Schaltkreis 455 eingegeben werden. Somit umfasst die Bedienvorrichtung 409 eine Einstellvorrichtung zum Einstellen der Vorstimulationszeit.

Vor dem Ansetzen des Melkzeugs wird die Vorstimulationszeit über die Bedienvorrichtung 409 eingegeben. Wenn die Bedienvorrichtung 409 ein Display aufweist, kann die eingegeben Zeit auf diesem angezeigt werden. Vorteilhafterweise können so fehlerhafte Eingaben leicht erkannt und korrigiert werden.

Vor dem Ansetzen des Melkzeugs wird der Schieber 311 mit Hilfe des Griffs 443 entgegen der Richtung des Pfeils 367 verschoben. Dadurch wird sichergestellt, dass sich die Stangen der Kolben der Drosselventile im tieferen Teil der keilförmigen Vertiefungen 341, 342 im Wesentlichen frei bewegen und so ihre Druckregelfunktion ausüben können. Der Stromfluss durch die Spule 452 ist zu diesem Zeitpunkt abgeschaltet, so dass der Schieber 311 durch den zweiten Arm des Hebels 450 daran gehindert wird, sich in Richtung des Pfeils 367 zurückzubewegen und die Drosselventile 305, 306 vollständig zu öffnen.

Beim Verschieben des Schiebers 311 gibt der Schalter 457 ein Signal an den Schaltkreis 455 ab. Der Schaltkreis 455 ist dafür ausgelegt, eine seit dem Empfang des Signals vom Schalter 457 verstrichene Zeit zu messen und nach Ablauf der eingestellten Vorstimulationszeit die Spule 452 elektrisch mit der Stromquelle 454 zu verbinden, so dass ein elektrischer Strom durch die Spule 452 fließt. Wenn sie von Strom durchflossen wird, erzeugt die Spule 452 ein Magnetfeld, durch das der erste Arm des Hebels 450 angezogen wird. Infolgedessen dreht sich der Hebel 450 um die Achse 453 und der zweite Arm des Hebels 450 steht einer Bewegung des Schiebers 311 nicht mehr im Weg. Deshalb wird der Schieber 311 durch die von der Zugfeder 458 ausgeübte Kraft in Richtung des Pfeils 367 verschoben und die Drosselventile 305, 306 werden vollständig geöffnet, so dass die vom Pulsator bereitgestellten Druckpulse ungehindert auf die Zitzengummis 105-108 wirken können und Milch aus dem Euter des Tiers abgemolken wird.

Ein schematischer Schaltplan des Schaltkreises 455 in einer speziellen Ausführungsform der vorliegenden Erfindung ist in Fig. 4b gezeigt.

Der Schaltkreis 455 umfasst eine Transistorschaltung 464. Diese weist einen Eingang 465 und einen Ausgang 468 sowie einen ersten Steueranschluss 466 und einen zweiten Steueranschluss 467 auf. Die Transistorschaltung 464 ist dafür ausgelegt, bei Empfang eines Signals am ersten Steueranschluss 466 einen elektrischen Kontakt zwischen dem Eingang 465 und dem Ausgang 468 herzustellen. Der Eingang 465 und der Ausgang 468 sind mit der Stromquelle 454 bzw. mit Stromversorgungsanschlüssen von Bauteilen im Schaltkreis 455 verbunden. Der erste Steueranschluss ist mit dem Schalter 457 verbunden, so dass nach einer Betätigung des Schalters 457 die Bauteile des Schaltkreises 455 so lange mit Strom versorgt werden, bis die Transistorschaltung 468 am zweiten Steueranschluss 467 ein Signal empfängt. In einer speziellen Ausführungsform der vorliegenden Erfindung kann die Transistorschaltung 464 einen selbsthaltenden Feldeffekttransistor umfassen.

Der Schaltkreis 455 umfasst ferner einen ersten Zeitgeber 460 und einen zweiten Zeitgeber 461. Der erste Zeitgeber 460 ist so beschaltet, dass er an einem Ausgang 470 ein periodisches Signal, beispielsweise ein Rechteckssignal, mit einer vorbestimmten Frequenz ausgibt. Zu diesem Zweck kann der Schaltkreis 455 weitere, in Fig. 4b der Übersichtlichkeit halber nicht gezeigte Bauteile umfassen. In einer speziellen Ausführungsform der Erfindung kann das vom ersten Zeitgeber 460 ausgegebene Signal eine Frequenz von ungefähr 1 kHz haben. Der Ausgang 470 des ersten Zeitgebers 460 ist mit einem Frequenzteiler 462 verbunden, der dafür ausgelegt ist, an einem Ausgang 471 ein periodisches Signal mit einer Frequenz, die ein vorgegebener. Bruchteil der vom ersten Zeitgeber 460 bereitgestellten Frequenz ist, auszugeben. In speziellen Ausführungsformen der vorliegenden Erfindung kann der Frequenzteiler 462 dafür ausgelegt sein, ein Signal mit einer um einen Faktor 2¹⁴ = 16384 niedrigeren Frequenz auszugeben.

Der Ausgang 471 des Frequenzteilers ist mit einem einstellbaren Zähler 463 verbunden. Der zahler 463 ist dafür ausgelegt, nach Empfang eines Signals an einem Eingang 472 eine Anzahl vom Frequenzteiler 462 bereitgestellter Impulse zu zählen und nach Empfang einer vorbestimmten Anzahl n von Impulsen an einem Ausgang 473 ein Signal auszugeben. Der Eingang 472 ist mit dem Schalter 457 verbunden, so dass der Zählvorgang bei einer Betätigung des Schalters 457 gestartet wird.

Die Anzahl n für den Zähler 463 kann über den Griff 443 am Schieber 311 und den mit ihm verbundenen Schalter 457 eingestellt werden. Der Schalter 457 kann am Schieber 311 so positioniert sein, dass er erst dann schaltet, wenn der Schieber 311 über den Einrastpunkt zwischen dem zweiten Arm des Hebels 450 und dem Vorsprung 440 hinaus gespannt wird. Damit besteht die Möglichkeit, den Schalter 457 bei gegen die Federkraft der Feder 458 gespanntem Schieber mehrmals hintereinander zu betätigen. Bei der ersten Betätigung des gespannten Schiebers 311 ist n=6, bei jeder weiteren Betätigung während der Stimulationszeit wird n auf 4, 3 und 2 reduziert. Somit kann die Stimulationszeit durch einfache mehrmalige Betätigungen des gespannten Schiebers 311 etwa auf 90, 60, 45 oder 30 Sekunden eingestellt werden.

Der Ausgang 473 des Zählers 463 ist mit einem Eingang 474 des zweiten Zeitgebers 461 verbunden. Der zweite Zeitgeber 461 ist so beschaltet, dass nach Empfang eines Signals am Eingang 474 während einer vorbestimmten Schaltzeit eine Spannung an einem Ausgang 475 angelegt wird. Zu diesem Zweck können im Schaltkreis 455 weitere, in Fig. 5 nicht gezeigte Bauteile vorgesehen sein. Der Ausgang 475 ist mit einem Gate eines Feldeffekttransistors 476 verbunden.

Der Feldeffekttransistor 476 ist an einem Anschluss 479 eines der Spule 452 angeschlossen und dafür ausgelegt, eine elektrische Verbindung zwischen der Stromquelle 454 und dem Anschluss 479 herzustellen, solange die vom zweiten Zeitgeber 461 bereitgestellte Spannung an seinem Gate anliegt. Parallel zu der Spule 452 kann eine Diode 482 angeschlossen werden, um eine Beschädigung von Bauteilen des Schaltkreises 455 durch induktiv erzeugte hohe Spannungen, die beim Schalten der Spule 452 auftreten können, zu verhindern.

Ein zweiter Ausgang des zweiten Zeitgebers 461 ist mit dem zweiten Steueranschluss 467 der Transistorschaltung 464 verbunden. Dadurch wird die Stromversorgung der Bauteile des Schaltkreises 455 zeitverzögert nach dem Auslösen des Hebels 450 abgeschaltet.

Beim Betrieb der Steuervorrichtung 409 wird durch eine Betätigung des Schalters 457 über die Transistorschaltung 464 die Stromversorgung der Bauteile des Schaltkreises 455 eingeschaltet. Gleichzeitig wird ein Signal am Eingang 472 des Zählers 463 angelegt, woraufhin dieser beginnt, die vom Frequenzteiler 462 empfangenen Impulse zu zählen. Nachdem die vorbestimmte Anzahl von Impulsen empfangen wurde, gibt der Zähler 463 an seinem Ausgang 473 ein Signal aus, durch das der zweite Zeitgeber 474 dazu veranlasst wird, während der vorbestimmten Schaltzeit eine Spannung an das Gate des Feldeffekttransistors 476 anzulegen. Über den Feldeffekttransistor 476 wird während der vorbestimmten Schaltzeit eine elektrische Verbindung zwischen der Stromquelle 454 und der Spule 452 hergestellt. Dadurch wird die Bewegung des Schiebers 311 ausgelöst, durch die Drosselventile 305, 306 vollständig geöffnet werden und die Vorstimulation beendet wird.

Der erste Zeitgeber 460 gibt Signale mit einer vorbestimmten Frequenz aus. Durch den Frequenzteiler 471 wird die Frequenz der Signale um einen vorbestimmten Faktor erniedrigt. Der Zähler 463 zählt eine vorbestimmte Anzahl der Signale niedriger Frequenz ab, bevor er ein Signal ausgibt, durch das die vollständige Öffnung der Drosselventile 305, 306 und damit das Ende der Vorstimulation ausgelöst wird. Somit werden die Drosselventile 305, 306 nach einer vorbestimmten Zeitdauer, die von der Frequenz der vom ersten Zeitgeber 460 abgegebenen Signale und der Anzahl der vom Zähler 463 bis zur Ausgabe des Signals gezählten Impulse abhängt, geöffnet. Die Dauer der Vorstimulation kann gesteuert werden, indem die Frequenz der vom ersten Zeitgeber 460 abgegebenen Impulse und/oder die Anzahl der vom Zähler 463 bis zur Ausgabe des Signals gesteuerten Impulse mit den Fachleuten bekannten Mitteln variiert wird.

In weiteren Ausführungsformen der vorliegenden Erfindung umfasst die Steuervorrichtung 409 anstelle des Schalters 457 einen Drucksensor. Dieser ist dafür ausgelegt, einen Druck in mindestens einem der ersten Anschlüsse 350, 351 zu messen. Der Schaltkreis 455 ist in solchen Ausführungsformen dafür ausgelegt, Druckpulse, die vom Pulsator bereitgestellt werden, zu detektieren, bei einer Detektion eines Druckpulses den elektronischen Zeitgeber in Gang zu setzen, mit Hilfe des elektronischen Zeitgebers die Zeit, die verstrichen ist, seitdem der erste Druckpuls vom Pulsator detektiert wurde, zu messen und nach Ablauf der eingestellten Vorstimulationszeit die Spule 452 elektrisch mit der Stromquelle 454 zu verbinden. Vorteilhafterweise entfällt dadurch die Notwendigkeit, den Beginn der Vorstimulation durch Verschieben des Griffs 443 von Hand festzulegen.

In manchen Ausführungsformen der vorliegenden Erfindung, in denen der Beginn der Vorstimulation durch Detektion eines Druckpulses vom Pulsator ermittelt wird, kann der Griff 443 des Schiebers 311 durch einen elektrischen Aktuator ersetzt werden, der dafür ausgelegt ist, den Schieber 367 entgegen der Richtung des Pfeils 367 zu bewegen. Ein solcher Aktuator kann beispielsweise ein Hubmagnet ähnlich der Spule 452 und ein Bauteil aus ferromagnetischem Material, das mit dem Schieber 311 verbunden ist, umfassen. Vorteilhafterweise ist es in solchen Ausführungsformen nicht notwendig, den Schieber 311 von Hand zu verschieben. Dadurch wird die Bedienung der Vorrichtung 300 vereinfacht und Fehler, die dadurch entstehen, dass vergessen wird, den Schieber 311 zu verschieben, können eliminiert werden.

Der Schieber 311 muss nicht, wie in den oben beschriebenen Ausführungsformen, in einer Längsrichtung verschiebbar sein. In anderen Ausführungsformen kann der Schieber um eine Achse drehbar gelagert sein. Vorteilhafterweise wird dadurch eine genauere und einfachere Lagerung des zweiten Arms des Hebels 450 und des Vorsprungs 440 relativ zueinander ermöglicht. Dadurch kann der Weg, den die Arme des Hebels 450 beim vollständigen Öffnen der Drosselventile 305, 306 zurücklegen müssen, verkleinert werden. Dies kann zu einer Verringerung des Stromverbrauchs beim Öffnen der Drosselventile 305, 306 führen.

Die Vorrichtung 300 zur Stimulation eines Euters bei einem Melkvorgang muss keinen Schieber 311 umfassen. In anderen Ausführungsformen der vorliegenden Erfindung können stattdessen die Drosselventile 305, 306 in Form elektrisch schaltbarer Magnetventile bereitgestellt werden, die direkt durch den Schaltkreis 455 gesteuert werden können. Vorteilhafterweise kann dadurch die Anzahl beweglicher mechanischer Komponenten der Vorrichtung 300 verringert werden, wodurch die Zuverlässigkeit der Vorrichtung 300 verbessert werden kann.

Die Drosselventile müssen nicht, wie in den oben beschriebenen Ausführungsformen, als Druckreglerventile ausgebildet sein. In anderen Ausführungsformen können die Drosselventile 305, 306 zwischen einem teilweise geöffneten Zustand, in dem sie einer Gasströmung einen Widerstand entgegen setzen und einem geöffneten Zustand, in sie einem Gasstrom im Wesentlichen keinen Widerstand entgegen setzen, schaltbar sein.

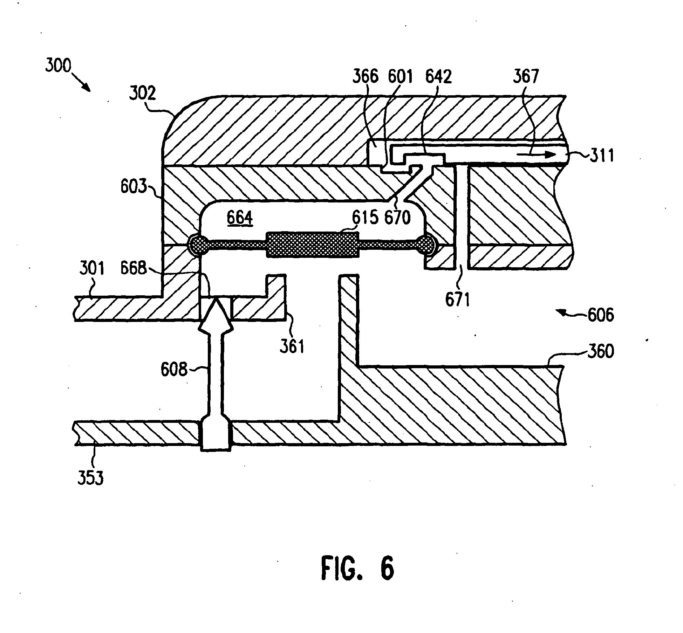

Eine schematische Querschnittsansicht eines Drosselventils 606 in einer Ausführungsform der vorliegenden Erfindung ohne Druckreglerventile ist in Fig. 6 gezeigt.

Das Drosselventil 606 umfasst eine Membran 615, die zwischen dem ersten Gehäuseteil 301 und einem zwischen dem ersten Gehäuseteil 301 und dem zweiten Gehäuseteil 302 vorgesehenem dritten Gehäuseteil 603 eingeklemmt ist. Unterhalb der Membran 615 befindet sich eine Öffnung 361, die eine Strömungsverbindung zwischen dem Kanal 360 und dem zweiten Anschluss 353 herstellt. Wenn auf die Membran keine Kraft ausgeübt wird, befindet sie sich aufgrund ihrer elastischen Spannung in einer in Fig. 6 dargestellten Ausgangsstellung, in der sie die Öffnung 361 freilässt.

Ein erster Druckausgleichskanal 670 ist mit dem Raum 664 oberhalb der Membrane 615 verbunden. Ein zweiter Druckausgleichskanal 671 steht mit dem Kanal 360 in Verbindung. Über den oberen, nahe beieinander liegenden Enden der Druckausgleichskanäle 670 und 671 befindet sich ein Steuerschieber 311. Dieser weist auf einer dem dritten Gehäuseteil 603 zugewandten Seite eine Vertiefung 642 auf.

Während der Vorstimulation befindet sich der Schieber 311 in der in Fig. 6 gezeigten Position. Dadurch kann Luft durch eine Vertiefung 601 im dritten Gehäuseteil und die Vertiefung 642 des Schiebers 311 zwischen dem Volumen 664 und dem Raum 366 strömen, so dass der Druck im Raum 664 im wesentlichen gleich dem Atmosphärendruck ist. Der zweite Druckausgleichskanal 671 wird in diesem Zustand durch den Schieber 311 verschlossen.

Am Ende der Vorstimulation wird der Schieber 311 ähnlich wie in den oben beschriebenen Ausführungsformen in Richtung des Pfeils 367 bewegt, und zwar so weit, dass sich die Vertiefung 642 oberhalb der Öffnungen des ersten Druckausgleichskanals 670 und des zweiten Druckausgleichskanals 671 befindet. Abmessungen der Vertiefung 642 und anderer Teile des Schiebers 311 sind so ausgelegt, dass die Vertiefung 642 in dieser Stellung des Schiebers 311 eine Strömungsverbindung zwischen dem ersten Druckausgleichskanal 370 und dem zweiten Druckausgleichskanal 371 herstellt und der Schieber 311 die Verbindung zwischen dem ersten Druckausgleichskanal 670 und dem Raum 366 verschließt. Somit ist in diesem Zustand der Druck im Raum 664 im wesentlichen gleich dem Druck im Kanal 360.

Während der Vorstimulation wirkt auf die elastische Membran 615 auf der dem Raum 664 zugewandten Seite der Atmosphärendruck. Auf die der Öffnung 361 zugewandte Seite der Membran 615 wirkt der vom Pulsator bereitgestellte Unterdruck. Dadurch wird die Membran aus ihrer Ausgangsstellung zu der Öffnung 361 hin gedrückt, bis die Öffnung 361 durch die Membran 615 verschlossen wird. Neben der Öffnung 361 befindet sich eine Düse 668, die eine Strömungsverbindung zwischen dem Kanal 360 und dem zweiten Anschluss 353 herstellt. Durch Drehen an einer Stellschraube 608 ähnlich der Stellschraube 308 in der oben mit Bezug auf Fig. 3b beschriebenen Ausführungsform kann ein Strömungswiderstand der Düse 668 eingestellt werden. Die Düse 668 ist dafür ausgelegt, einer Strömung eines Gases durch die Düse 668 einen relativ großen Widerstand entgegenzusetzen, so dass der Druck im Anschluss 353 während der vom Pulsator bereitgestellten Druckpulse langsam abfällt. Dadurch hat der Druck im Kanal 360 einen Verlauf ähnlich dem in Fig. 5 durch die Kurve 505 veranschaullchten.

Nach dem Ende der Vorstimulation ist der Druck auf beiden Seiten der Membran 615 im Wesentlichen gleich, so dass auf die Membran in wesentlichen keine Kraft mehr wirkt. Deshalb befindet sich die Membran in ihrer Ausgangsstellung, in der sie die Öffnung 361 nicht blockiert, so dass Luft durch die Öffnung 361 strömen kann und der Druck im Anschluss 353 im wesentlichen gleich dem vom Pulsator bereitgestellten Druck ist. Damit findet eine pneumatische Hemmung der Wirkung des Drosselventils 606 statt.

Der Schieber 311 muss sich nicht ein Längsschieber sein. Die oberen Enden der Druckausgleichskanäle 670 und 671 können auch durch einen Drehschieber angesteuert werden. In einer Ausführungsform der Erfindung kann eine entsprechend ausgestaltete Stirnfläche des Zahnrades 312 als Drehschieber arbeiten.

In einer andere Ausführungsform der Erfindung ist der zweite Druckausgleichskanal 671 nicht mit dem Raum 366, sondern direkt mit dem Raum 664 verbunden. Im Druckausgleichskanal 671 ist ein Drosselelement, beispielsweise eine Düse, vorgesehen, das einer Gasströmung zwischen dem Raum 664 und dem Kanal 360 einen relativ hohen Widerstand entgegensetzt. Der erste Druckausgleichskanal 670 ist wie in Fig. 6 angeordnet und beinhaltet kein Drosselelement Aus das obere Ende des ersten Druckausgleichskanals 670 wirkt ein schaltbares Verschlusselement, das die Öffnung entweder verschließen oder freigeben kann.

Wird die Öffnung des ersten Druckausgleichskanals 670 verschlossen, bildet sich, über den zweiten Druckausgleichskanal 671, im Raum 664 oberhalb der Membrane im Wesentlichen der gleiche Druck aus, wie im Kanal 360 und damit dem Raum unterhalb der Membrane 615. Damit bleibt die Membrane 615 aufgrund ihrer elastischen Spannung in der in der Figur 6 gezeigten Ausgangsstellung. Diese Stellung lässt eine ungehinderte Strömung zwischen dem Kanal 360 und dem zweiten Anschluss 353 zu, so wie. es für den normalen Melkvorgang vorgesehen ist.

Wird die obere Öffnung des ersten Druckausgleichskanals 670 freigegeben, so strömt durch diesen atmosphärische Luft in den Raum 664 oberhalb der Membrane 615. Da der Strömungswiderstand im ersten Druckausgleichskanal 670 wesentlich kleiner ist, als der im zweiten mit einem Drosselelement versehene Druckausgleichskanal 671, der den Raum 664 oberhalb der Membrane 615 mit dem Kanal 360 verbindet, stellt sich im Raum 664 im Wesentlichen Atmosphärendruck ein. Damit wird die Membran 615 aufgrund des Druckunterschiedes auf ihre Oberseite und ihre Unterseite in Richtung auf die Öffnung 361 ausgelenkt, sodass diese verschlossen wird. Damit ist die Strömung zwischen Kanal 360 und dem zweiten Anschluss 353 gedrosselt, so wie es für die Vorstimulationsphase vorgesehen ist. Die hier beschriebene Ausführungsform hat insbesondere den Vorteil, dass das schaltbare Verschlusselement sehr klein ausgebildet sein kann und sehr wenig Schaltkraft benötigt. Damit kann ein solches Verschlusselement, etwa wenn es aus ferromagnetischem Material besteht, auch direkt durch die Magnetkraft einer kleinen, wenig Energie verbrauchenden Spule betätigt werden. Durch einen solchen vereinfachten Aufbau können die Herstellungskosten gesenkt werden, ohne Nachteile bei der Bedienung oder bei Energieverbrauch in Kauf nehmen zu müssen.

## Patentansprüche

1. Vorrichtung zur Stimulation eines Euters bei einem Melkvorgang mit
einem mit einer Hand umfassbaren Gehäuse (318) mit einem ersten Anschluss (350,351) und einem zweiten Anschluss (352,353), wobei der erste Anschluss (350,351) zur Verbindung mit einem Pulsator geeignet ist und der zweite Anschluss (352,353) zur Verbindung mit einem Melkbecher geeignet ist;
einem im Gehäuse (318) zwischen dem ersten Anschluss (350,351) und dem zweiten Anschluss (352,353) angebrachten Drosselventil (305) und
einer im Gehäuse untergebrachten Steuervorrichtung (309), die dafür ausgelegt ist, das Drosselventil (305) nach einer vorgegebenen Zeitdauer von einem teilweise geschlossenen Zustand in einen geöffneten Zustand zu versetzen.

2. Vorrichtung zur Stimulation eines Euters bei einem Melkvorgang nach Anspruch 1, die eine Gesamtlänge von nicht mehr als 15 cm aufweist.

3. Vorrichtung zur Stimulation eines Euters bei einem Melkvorgang nach einem der vorhergehenden Ansprüche, die ein Gesamtgewicht von nicht mehr als 150 Gramm aufweist.

4. Vorrichtung zur Stimulation eines Euters bei einem Melkvorgang nach einem der vorhergehenden Ansprüche, in der die Steuervorrichtung (309) eine Einstellvorrichtung zum Einstellen der vorgegebenen Zeitdauer umfasst.

5. Vorrichtung zur Stimulation eines Euters bei einem Melkvorgang nach Anspruch 4, in der die Einstellvorrichtung ein Schlagwerk umfasst, das dafür ausgelegt ist, beim Einstellen eines Werts der vorgegebenen Zeitdauer, der einen Schwellwert unterschreitet, ein akustisches Signal und/oder in der Hand spürbares Signal zu erzeugen.

6. Vorrichtung zur Stimulation eines Euters bei einem Melkvorgang nach einem der vorhergehenden Ansprüche, in der die Steuervorrichtung (309) fremdenergieunabhängig ausgebildet ist.

7. Vorrichtung zur Stimulation eines Euters bei einem Melkvorgang nach Anspruch 6, in der die Steuervorrichtung (309) dafür ausgelegt ist, durch von dem Pulsator stammende Druckwirkungen angetrieben zu werden.

8. Vorrichtung zur Stimulation eines Euters bei einem Melkvorgang nach einem der vorhergehenden Ansprüche, in der die Steuervorrichtung (309) umfasst:
ein von einer Membran (315) abgeschlossenes Volumen, das sich in Strömungsverbindung mit dem ersten Anschluss (350,351) befindet, wobei eine Außenseite der Membran (315) dem Atmosphärendruck ausgesetzt ist;
eine Übertragungsvorrichtung, die dafür ausgelegt ist, durch Druckunterschiede im Volumen verursachte Bewegungen der Membran (315) in eine Drehbewegung eines Zahnrads (312) umzusetzen; und
einen auf das Drosselventil (305,306) einwirkenden Schieber, der dafür ausgelegt ist, in Folge der Drehbewegung des Zahnrads (312) verschoben zu werden.

9. Vorrichtung zur Stimulation eines Euters bei einem Melkvorgang nach Anspruch 8, in der der Schieber auf einer dem Drosselventil (305,306) abgewandten Seite einen Vorsprung aufweist, der in eine auf dem Zahnrad (312) angebrachte Rille eingreift.

10. Vorrichtung zur Stimulation eines Euters bei einem Melkvorgang nach einem der Ansprüche 8 und 9, in der das Zahnrad (312) an seinem Umfang eine Lücke ohne Zähne aufweist.

11. Vorrichtung zur Stimulation eines Euters bei einem Melkvorgang nach einem der Ansprüche 1 bis 4, in der das Drosselventil (305,306) elektrisch zwischen dem teilweise geöffneten Zustand und dem geöffneten Zustand schaltbar ist und die Steuervorrichtung einen zum Schalten des Drosselventils (305,306) geeigneten Schaltkreis umfasst.

12. Vorrichtung zur Stimulation eines Euters bei einem Melkvorgang nach Anspruch 11, in der der Schaltkreis (455) einen elektronischen Zeitgeber umfasst und dafür ausgelegt ist, das Drosselventil (305,306) bei Empfang eines Signals vom elektronischen Zeitgeber zu schalten.

13. Vorrichtung zur Stimulation eines Euters bei einem Melkvorgang nach Anspruch 11, in der der Schaltkreis einen Drucksensor, der in Strömungsverbindung mit dem ersten Anschluss steht, umfasst und dafür ausgelegt ist, den elektronischen Zeitgeber bei einer Detektion eines Druckpulses in Gang zu setzen.

14. Vorrichtung zur Stimulation eines Euters bei einem Melkvorgang nach einem der vorhergehenden Ansprüche, die ein Paar erster Anschlüsse (350,351) und ein Paar zweiter Anschlüsse (352,353) umfasst, wobei jeweils zwischen einem der ersten Anschlüsse (350,351) und einem der zweiten Anschlüsse (352,353) ein Drosselventil (306) angebracht ist und die Steuervorrichtung (309) dafür ausgelegt ist, beide Drosselventile nach der vorbestimmten Zeitdauer von dem teilweise geschlossenen Zustand in den geöffneten Zustand zu versetzen.

15. Vorrichtung zur Stimulation eines Euters bei einem Melkvorgang nach einem der vorhergehenden Ansprüche, in der das Drosselventil (306) ein Druckreglerventil umfasst.

16. Vorrichtung zur Stimulation eines Euters bei einem Melkvorgang nach Anspruch 15, in der das Druckreglerventil ein verstellbares elastisches Element umfasst.

17. Vorrichtung zur Stimulation eines Euters bei einem Melkvorgang nach Anspruch 11, mit:
einem von Hand gegen eine Federkraft spannbaren und einrastbaren Schieber, der dafür ausgelegt ist, auf das Drosselventil (305,306) einzuwirken; und
einer elektrisch steuerbaren Entriegelungsvorrichtung, die dafür ausgelegt ist, die Einrastung des Schiebers bei Empfang eines Signals vom Schaltkreis aufzuheben.

## Claims

1. Device for stimulating an udder during milking comprising:
a housing (318) that can be grasped by a hand and that has a first connection (350, 351) and a second connection (352, 353), wherein the first connection (350, 351) is suitable for connection to a pulsator and the second connection (352, 353) is suitable for connection to a teat cup;
a throttle valve (309) interposed in the housing (318) between the first connection (350, 351) and the second connection (352, 353); and
a control device (309) housed in the housing and designed to move the throttle valve (309) from a partially closed position into an open position after a specified length of time.

2. Device for stimulating an udder during milking according to Claim 1, said device having a total length of not more than 15 cm.

3. Device for stimulating an udder during milking according to one of the preceding claims, said device having a total weight of not more than 150 grams.

4. Device for stimulating an udder during milking according to one of the preceding claims, wherein the control device (309) comprises an adjustment device for setting the specified length of time.

5. Device for stimulating an udder during milking according to Claim 4, wherein the adjustment device comprises a striking mechanism that is designed to generate an acoustic signal and / or a signal that can be felt in the hand should a value that falls below a threshold value be set for the specified length of time.

6. Device for stimulating an udder during milking according to one of the preceding claims, wherein the control device (309) is formed so that it is independent of outside energy.

7. Device for stimulating an udder during milking according to Claim 6, wherein the control device (309) is designed to be driven by the pressure effects coming from the pulsator.

8. Device for stimulating an udder during milking according to one of the preceding claims, wherein the control device (309) comprises:
a volume sealed off by a membrane (319) that is in a fluid flow connection with the first connection (350, 351), wherein an exterior side of the membrane (315) is exposed to atmospheric pressure;
a transmission device that is designed to convert movements of the membrane (315) that are caused by pressure differences in the volume into a rotational movement of a toothed wheel (312); and
a slide valve that acts on the throttle valve (305, 306) and that is designed to be slid as a result of the rotational movement of the toothed wheel (312).

9. Device for stimulating an udder during milking according to Claim 8, wherein the slide valve has a projection on the side facing away from the throttle valve (309; 306) and wherein said projection engages in a groove formed in the toothed wheel (312).

10. Device for stimulating an udder during milking according to one of the Claims 8 and 9, wherein the toothed wheel (312) has a gap without teeth along its circumference.

11. Device for stimulating an udder during milking according to one of the Claims 1 to 4, wherein the throttle valve (305, 306) can be electrically switched between the partially open position and the open position and wherein the control device comprises a switching circuit that is suitable for switching the throttle valve (309, 306).

12. Device for stimulating an udder during milking according to Claim 11, wherein the switching circuit (455) comprises an electronic timer and wherein the switching circuit is designed to switch the throttle valve (305, 306) upon receipt of a signal from the electronic timer.

13. Device for stimulating an udder during milking according to Claim 11, wherein the switching circuit comprises a pressure sensor that is in a fluid flow connection with the first connection and wherein the switching circuit is designed to start the electronic timer when a pressure impulse is detected.

14. Device for stimulating an udder during milking according to one of the preceding claims, wherein the device comprises a pair of first connections (305, 351) and a pair of second connections (352, 353) and wherein a throttle valve (306) is respectively disposed between one of the first connections (350, 351) and one of the second connections (352, 353) and the control device (309) is designed to move both throttle valves from the partially closed position into the open position after said specified length of time.

15. Device for stimulating an udder during milking according to one of the preceding claims, wherein the throttle valve (306) comprises a pressure regulation valve.

16. Device for stimulating an udder during milking according to Claim 15, wherein the pressure regulation valve comprises an adjustable elastic element.

17. Device for stimulating an udder during milking according to Claim 11, wherein the device has:
a slide valve that can be tensed by hand against a spring force and locked into place and that is designed to act on the throttle valve (305, 306); and
an electrically controllable unlocking device that is designed to release the slide valve when a signal is received from the switching circuit.

## Revendications

1. Dispositif pour stimuler un pis lors d'une opération de traite, comprenant :
un boîtier (318) apte à être pris avec une main, avec un premier raccord (350, 351) et un second raccord (352, 353), le premier raccord (350, 351) étant apte à être relié à un pulsateur tandis que le second raccord (352, 353) est apte à être relié à un gobelet trayeur ;
une soupape d'étranglement (305) qui est installée dans le boîtier (318) entre le premier raccord (350, 351) et le second raccord (352, 353) ; et
un dispositif de commande (309) qui est logé dans le boîtier et qui est conçu pour faire passer la soupape d'étranglement (305), au bout d'une durée prédéfinie, d'une position en partie fermée à une position ouverte.

2. Dispositif pour stimuler un pis lors d'une opération de traite selon la revendication 1, qui présente une longueur totale qui ne dépasse pas 15 cm.

3. Dispositif pour stimuler un pis lors d'une opération de traite selon l'une des revendications précédentes, qui présente un poids total qui ne dépasse pas 150 grammes.

4. Dispositif pour stimuler un pis lors d'une opération de traite selon l'une des revendications précédentes, dans lequel le dispositif de commande (309) comprend un dispositif de réglage pour régler la durée prédéfinie.

5. Dispositif pour stimuler un pis lors d'une opération de traite selon la revendication 4, dans lequel le dispositif de réglage comprend une sonnerie qui est conçue pour produire un signal acoustique et/ou un signal perceptible dans la main lorsqu'on règle pour la durée prédéfinie une valeur qui est inférieure à une valeur seuil.

6. Dispositif pour stimuler un pis lors d'une opération de traite selon l'une des revendications précédentes, dans lequel le dispositif de commande (309) est conçu pour être indépendant d'une énergie extérieure.

7. Dispositif pour stimuler un pis lors d'une opération de traite selon la revendication 6, dans lequel le dispositif de commande (309) est conçu pour être entraîné par des effets de pression qui proviennent du pulsateur.

8. Dispositif pour stimuler un pis lors d'une opération de traite selon l'une des revendications précédentes, dans lequel le dispositif de commande (309) comprend :
un volume fermé par une membrane (315) qui est en communication d'écoulement avec le premier raccord (350, 351), un côté extérieur de la membrane (315) étant exposé à la pression atmosphérique ;
un dispositif de transmission qui est conçu pour transformer les mouvements de la membrane (315) provoqués par les différences de pression dans le volume en mouvement rotatif d'une roue dentée (312) ; et
un coulisseau qui agit sur la soupape d'étranglement (305, 306) et qui est apte à être déplacé à la suite du mouvement rotatif de la roue dentée (312).

9. Dispositif pour stimuler un pis lors d'une opération de traite selon la revendication 8, dans lequel le coulisseau présente sur un côté opposé à la soupape d'étranglement (305 ; 306) une saillie qui entre dans une rainure prévue sur la roue dentée (312).

10. Dispositif pour stimuler un pis lors d'une opération de traite selon l'une des revendications 8 et 9, dans lequel la roue dentée (312) présente sur sa circonférence un espace sans dents.

11. Dispositif pour stimuler un pis lors d'une opération de traite selon l'une des revendications 1 à 4, dans lequel la soupape d'étranglement (305, 306) est apte à être manoeuvrée électriquement entre la position en partie ouverte et la position ouverte, et le dispositif de commande comprend un circuit apte à manoeuvrer la soupape d'étranglement (305, 306).

12. Dispositif pour stimuler un pis lors d'une opération de traite selon la revendication 11, dans lequel le circuit (455) comprend une horloge électronique et est conçu pour manoeuvrer la soupape d'étranglement (305, 306) lors de la réception d'un signal de l'horloge électronique.

13. Dispositif pour stimuler un pis lors d'une opération de traite selon la revendication 11, dans lequel le circuit comprend un capteur de pression qui est en relation d'écoulement avec le premier raccord, et est conçu pour mettre en marche l'horloge électronique lors de la détection d'une impulsion de pression.

14. Dispositif pour stimuler un pis lors d'une opération de traite selon l'une des revendications précédentes, qui comprend une paire de premiers raccords (350, 351) et une paire de seconds raccords (352, 353), une soupape d'étranglement (306) étant installée entre l'un des premiers raccords (350, 351) et l'un des seconds raccords (352, 353), et le dispositif de commande (309) est conçu pour faire passer les deux soupapes d'étranglement, au bout de la durée prédéfinie, de la position en partie fermée à la position ouverte.

15. Dispositif pour stimuler un pis lors d'une opération de traite selon l'une des revendications précédentes, dans lequel la soupape d'étranglement (306) comprend une soupape de régulation de pression.

16. Dispositif pour stimuler un pis lors d'une opération de traite selon la revendication 15, dans lequel la soupape de régulation de pression comprend un élément élastique réglable.

17. Dispositif pour stimuler un pis lors d'une opération de traite selon la revendication 11, comprenant :
un coulisseau qui est apte à être serré et enclenché à la main à l'encontre d'une force élastique et qui est conçu pour agir sur la soupape d'étranglement (305, 306) ; et
un dispositif de déverrouillage à commande électrique qui est conçu pour supprimer l'enclenchement du coulisseau lors de la réception d'un signal du circuit.
